# EUROPEAN PATENT APPLICATION

(11) **EP 4 826 572 A1**
(43) Date of publication of application: **21.10.2026**
(21) Application number: 24911577.5
(22) Date of filing: 28.12.2024
(51) Int. Cl.: G06F 18/214

(54) **MODEL DATA ACQUISITION METHOD, APPARATUS AND SYSTEM**

(30) Priority: 29.12.2023 CN 202311871100
(71) Applicant: Huawei Technologies Co., Ltd., Shenzhen, Guangdong 518129 (CN)
(72) Inventor: CHEN, Jiaxuan, Shenzhen, Guangdong 518129 (CN); SUN, Yan, Shenzhen, Guangdong 518129 (CN)
(74) Representative: Epping - Hermann - Fischer
(86) International application number: PCT/CN2024/143477
(87) International publication number: WO 2025/140663

(57) **Abstract**

This application provides an artificial intelligence AI model data obtaining method and apparatus, and a system. The method may include: receiving first information from a second node, where the first information includes the following types of information: raw data and feature information of the raw data; and generating multiple synthetic data items based on the first information, where the multiple synthetic data items are used for model processing. In this example, synthetic data that meets a diversity requirement and that has same data distribution as that of field measured data may be generated based on the raw data and the feature information of the raw data, improving quality of the synthetic data, and further helping improve performance of model training or update.

## Description

This application claims priority to Chinese Patent Application No. 202311871100.7, filed with the China National Intellectual Property Administration on December 29, 2023, and entitled "MODEL DATA OBTAINING METHOD, APPARATUS, AND SYSTEM", which is incorporated herein by reference in its entirety.

### TECHNICAL FIELD

This application relates to the field of artificial intelligence (Artificial Intelligence, AI), and in particular, to a model data obtaining method, apparatus, and system.

### BACKGROUND

With the development of artificial intelligence research, application scenarios of neural networks keep expanding, including smart medical care, intelligent networks, and the like. Therefore, how to effectively train a neural network in a specific scenario becomes an important research direction. Three important factors in neural network training are data, neural network and computing platform. With the popularization of graphics processing unit (Graphic Processing Unit, GPU) deployment, the proportion of devices having a neural network computing platform is on the rise. Therefore, the demand for dedicated neural network training for practitioners increases.

Quality of training data is an important factor that affects performance of model training and fine tuning. However, for a discrete device, for example, a terminal side/a specific base station side, it is very challenging to obtain training data for training or fine tuning of a deployed dedicated model/dedicated model for a specific scenario. For one thing, model training or fine tuning requires sufficient training data corresponding to a scenario to ensure convergence performance of the model. However, field measured data obtained by the device is limited, and it is difficult to ensure model performance by using only data collected by the device. For another thing, model training or fine tuning requires rich data features to ensure generalization and robustness of the model. However, the field measured data obtained by the device is limited, resulting in limited data feature diversity.

In a conventional technology, a central node receives and combines raw local data of multiple devices as a training set, to improve a training data quantity and data diversity of the training set. Further, the central node performs model training or model update by using the combined training set. The trained model is deployed on the device for model inference. The central node obtains synthetic data only by using the raw local data of the multiple devices as an input of a generation model, and quality of the synthetic data is not high.

### SUMMARY

This application discloses a model data obtaining method and apparatus, and a system, to improve quality of synthetic data.

According to a first aspect, an embodiment of this application provides a model data obtaining method, which is performed by a first node or a circuit used for a first node. The method includes: receiving first information from a second node, where the first information includes the following types of information: raw data and feature information of the raw data; and generating multiple synthetic data items based on the first information, where the multiple synthetic data items are used for model processing.

In this embodiment of this application, the first node or a circuit used for the first node, for example, a chip, generates the multiple synthetic data items based on the obtained raw data and feature information of the raw data.

Synthetic data that meets a diversity requirement and that has same data distribution as that of field measured data may be generated based on the raw data and the feature information of the raw data, improving quality of the synthetic data, and further helping improve performance of model training or update. The following uses the first node as an execution body for description. It may be understood that the first node may alternatively be replaced with a circuit used for the first node, for example, a chip.

In a possible implementation, the first node may send second information to the second node. The second information indicates a processing manner in which the second node obtains the first information, where the processing manner in which the second node obtains the first information includes an obtaining manner of the feature information of the raw data.

Based on the indication of the second information, the second node processes the raw data, to obtain the feature information of the raw data.

In a possible implementation, the first information further includes at least one of the following types of information: a priority of the raw data or a data label of the raw data.

The priority of the raw data is reported, so that the first node determines, based on a priority or a probability of each piece of raw data, a quantity of to-be-generated synthetic data similar to the raw data, and the like, to enable consistency between distribution of the synthetic data and an expectation.

In a possible implementation, the processing manner in which the second node obtains the first information further includes an obtaining manner of the data label of the raw data.

Based on the obtaining manner of the data label of the raw data, the second node processes the raw data to obtain the data label of the raw data.

In a possible implementation, the first node further sends third information to the second node, where the third information indicates a reporting configuration of the first information.

The first node sends the third information to the second node, so that the second node performs reporting based on the reporting configuration of the first information indicated in the third information. In this way, a data provisioning end and a data synthesis end that are separated from each other can align understanding of data, improving quality of synthetic data.

Optionally, the reporting configuration includes at least one of the following: a type of the first information and a data quantity of the first information.

The first node sends a reporting configuration of the type of the first information and/or a reporting configuration of the data quantity of the first information to the second node, so that the second node sends first information of a corresponding type or first information of a corresponding data quantity to the first node, helping improve quality of the synthetic data.

In a possible implementation, the first node further sends fourth information to the second node. The fourth information indicates that the first node has a capability of performing joint processing on feature information of multiple raw data items of a same group. The joint processing may be, for example, weighted summation of feature information of multiple raw data items of a same group.

The first node sends the fourth information to the second node, so that the second node may classify raw data that can be jointly processed into a same group, and does not classify raw data that cannot be jointly processed into a same group, so that raw data of different groups are not fused and synthetic data that does not meet expectations is not generated.

In a possible implementation, the first information further includes the following type of information: group information of the raw data.

The second node reports the group information of the raw data to the first node, so that the first node may perform joint processing on feature information of multiple raw data items of a same group.

In a possible implementation, the first node further sends at least one subset of the multiple synthetic data items to the second node. The first node further receives fifth information from the second node. The fifth information indicates an evaluation result of at least one piece of synthetic data in the at least one subset. The evaluation result indicates at least one piece of synthetic data that needs to be removed from the at least one subset, or indicates at least one piece of synthetic data that does not need to be removed from the at least one subset.

Optionally, the evaluation result is used to screen the multiple synthetic data items, to obtain at least one piece of synthetic data obtained through screening, where the at least one piece of synthetic data obtained through screening is used for the model processing.

In a possible implementation, the at least one piece of synthetic data obtained through screening is determined based on a distance between first synthetic data to be removed and another piece of synthetic data in the multiple synthetic data items, and the first synthetic data to be removed is synthetic data that needs to be removed as determined based on the fifth information.

The synthetic data is screened through an evaluation process of the synthetic data, effectively improving quality of the synthetic data.

Alternatively, an embodiment of this application provides a model data obtaining method, which is performed by a first node or a circuit used for a first node. The method includes: A first node receives sixth information from a second node, where the sixth information includes the following type of information: raw data; and the first node generates multiple synthetic data items based on the sixth information and feature information of the raw data, where the multiple synthetic data items are used for model processing. The following uses the first node as an execution body for description. It may be understood that the first node may alternatively be replaced with a circuit used for the first node, for example, a chip.

In a first possible implementation, the first node further receives eleventh information from a third node, where the eleventh information includes the following type of information: the feature information of the raw data.

In a second possible implementation, the first node further receives ninth information from the second node, where the ninth information indicates an obtaining manner in which the first node obtains the feature information of the raw data. Further, the first node processes the raw data based on the ninth information to obtain the feature information of the raw data.

In a third possible implementation, the first node further receives ninth information from a third node, where the ninth information indicates an obtaining manner in which the first node obtains the feature information of the raw data. Further, the first node processes the raw data based on the ninth information to obtain the feature information of the raw data.

In a fourth possible implementation, the feature information of the raw data is determined based on an obtaining manner of the feature information of the raw data, and the obtaining manner of the feature information of the raw data is determined by the first node.

In a possible implementation, the sixth information further includes at least one of the following types of information: a priority of the raw data or a data label of the raw data.

The priority of the raw data is reported, so that the first node determines, based on a priority or a probability of each piece of raw data, a quantity of to-be-generated synthetic data similar to the raw data, and the like, to enable consistency between distribution of the synthetic data and an expectation.

In a possible implementation, the first node further sends eighth information to the second node, where the eighth information indicates a processing manner in which the second node obtains the sixth information, and the processing manner in which the second node obtains the sixth information includes an obtaining manner of the data label of the raw data.

Based on the obtaining manner of the data label of the raw data, the second node processes the raw data to obtain the data label of the raw data.

In a possible implementation, the first node further sends seventh information to the second node, where the seventh information indicates a reporting configuration of the sixth information.

The first node sends the seventh information to the second node, so that the second node performs reporting based on the reporting configuration of the sixth information indicated in the seventh information. In this way, a data provisioning end and a data synthesis end that are separated from each other can align understanding of data, improving quality of synthetic data.

Optionally, the reporting configuration includes at least one of the following: a type of the sixth information or a data quantity of the sixth information.

The first node sends a reporting configuration of the type of the sixth information and/or a reporting configuration of the data quantity of the sixth information to the second node, so that the second node sends sixth information of a corresponding type or sixth information of a corresponding data quantity to the first node, helping improve quality of the synthetic data.

In a possible implementation, the first node further sends fourth information to the second node. The fourth information indicates that the first node has a capability of performing joint processing on feature information of multiple raw data items of a same group. The joint processing may be, for example, weighted summation of feature information of multiple raw data items of a same group.

The first node sends the fourth information to the second node, so that the second node may classify raw data that can be jointly processed into a same group, and does not classify raw data that cannot be jointly processed into a same group, so that raw data of different groups are not fused and synthetic data that does not meet expectations is not generated.

In a possible implementation, the sixth information further includes the following type of information: group information of the raw data.

The second node reports the group information of the raw data to the first node, so that the first node may perform joint processing on feature information of multiple raw data items of a same group.

In a possible implementation, the first node further sends at least one subset of the multiple synthetic data items to the second node. The first node further receives fifth information from the second node. The fifth information indicates an evaluation result of at least one piece of synthetic data in the at least one subset. The evaluation result indicates at least one piece of synthetic data that needs to be removed from the at least one subset, or indicates at least one piece of synthetic data that does not need to be removed from the at least one subset.

Optionally, the evaluation result is used to screen the multiple synthetic data items, to obtain at least one piece of synthetic data obtained through screening, where the at least one piece of synthetic data obtained through screening is used for the model processing.

In a possible implementation, the at least one piece of synthetic data obtained through screening is determined based on a distance between first synthetic data to be removed and another piece of synthetic data in the multiple synthetic data items, and the first synthetic data to be removed is synthetic data that needs to be removed as determined based on the fifth information.

The synthetic data is screened through an evaluation process of the synthetic data, effectively improving quality of the synthetic data.

According to a second aspect, an embodiment of this application provides a model data obtaining method, which is performed by a second node or a circuit used for a second node. The method includes: sending first information to a first node, where the first information includes the following types of information: raw data and feature information of the raw data. The following uses the second node as an execution body for description. It may be understood that the second node may alternatively be replaced with a circuit used for the second node, for example, a chip.

In this embodiment of this application, the second node sends the raw data and the feature information of the raw data to the first node, where the raw data and the feature information of the raw data are used to generate multiple synthetic data items.

Synthetic data that meets a diversity requirement and that has same data distribution as that of field measured data may be generated based on the raw data and the feature information of the raw data, improving quality of the synthetic data, and further helping improve performance of model training or update.

In a possible implementation, the second node further receives second information from the first node, where the second information indicates a processing manner in which the second node obtains the first information. For example, the processing manner in which the second node obtains the first information includes an obtaining manner of the feature information of the raw data. Further, the second node obtains the first information based on the second information.

In a possible implementation, the first information further includes at least one of the following types of information: a data label of the raw data or a priority of the raw data.

In a possible implementation, the processing manner further includes an obtaining manner of the data label of the raw data.

In a possible implementation, the second node further receives third information from the first node, where the third information indicates a reporting configuration of the first information.

Optionally, the reporting configuration includes at least one of the following: a type of the first information and a data quantity of the first information.

In a possible implementation, the second node further receives fourth information from the first node, where the fourth information indicates that the first node has a capability of performing joint processing on feature information of multiple raw data items of a same group.

In a possible implementation, the first information further includes the following type of information: group information of the raw data.

In a possible implementation, the second node further receives at least one subset of multiple synthetic data items from the first node. The second node further sends fifth information to the first node, where the fifth information indicates an evaluation result of at least one piece of synthetic data in the at least one subset. The evaluation result indicates at least one piece of synthetic data that needs to be removed from the at least one subset, or indicates at least one piece of synthetic data that does not need to be removed from the at least one subset.

In a possible implementation, the evaluation result is determined based on a distance between at least one piece of synthetic data in the at least one subset and local data.

In a possible implementation, the evaluation result is used to screen the multiple synthetic data items to obtain at least one piece of synthetic data obtained through screening, where the at least one piece of synthetic data obtained through screening is used for model processing.

Alternatively, an embodiment of this application provides a model data obtaining method, which is performed by a second node or a circuit used for a second node. The method includes: A second node sends sixth information to a first node, where the sixth information includes the following type of information: raw data; and
the second node further sends ninth information to the first node, where the ninth information indicates an obtaining manner in which the first node obtains feature information of the raw data.

In a possible implementation, the second node further receives eighth information from the first node, where the eighth information indicates a processing manner in which the second node obtains the sixth information, and the processing manner in which the second node obtains the sixth information includes an obtaining manner of a data label of the raw data.

In a possible implementation, the second node further receives seventh information from the first node, where the seventh information indicates a reporting configuration of the sixth information.

In a possible implementation, the second node further receives fourth information from the first node. The fourth information indicates that the first node has a capability of performing joint processing on feature information of multiple raw data items of a same group.

In a possible implementation, the second node further receives at least one subset of multiple synthetic data items from the first node. The second node further sends fifth information to the first node, where the fifth information indicates an evaluation result of at least one piece of synthetic data in the at least one subset. The evaluation result indicates at least one piece of synthetic data that needs to be removed from the at least one subset, or indicates at least one piece of synthetic data that does not need to be removed from the at least one subset.

In a possible implementation, the evaluation result is determined based on a distance between at least one piece of synthetic data in the at least one subset and local data.

In a possible implementation, the evaluation result is used to screen the multiple synthetic data items to obtain at least one piece of synthetic data obtained through screening, where the at least one piece of synthetic data obtained through screening is used for model processing.

According to a third aspect, an embodiment of this application provides a model data obtaining method, which is performed by a third node or a circuit used for a third node. The method includes: sending eleventh information to a first node, where the eleventh information includes the following type of information: feature information of raw data. In this way, the first node obtains synthetic data based on the feature information of the raw data, that is, the feature information of the raw data is used to generate the synthetic data.

Alternatively, an embodiment of this application provides a model data obtaining method, which is performed by a third node or a circuit used for a third node. The method includes: sending ninth information to a first node, where the ninth information indicates an obtaining manner in which the first node obtains feature information of raw data. In this way, the first node processes the raw data based on the ninth information to obtain the feature information of the raw data, that is, the obtaining manner of the feature information of the raw data is used to obtain the feature information of the raw data.

According to a fourth aspect, this application provides a model data obtaining apparatus, where the apparatus may include a transceiver module and a processing module, and details are as follows.

The transceiver module is configured to receive first information from a second node, where the first information includes the following types of information: raw data and feature information of the raw data.

The processing module is configured to generate multiple synthetic data items based on the first information, where the multiple synthetic data items are used for model processing.

In a possible implementation, the transceiver module is further configured to send second information to the second node, where the second information indicates a processing manner in which the second node obtains the first information, and the processing manner in which the second node obtains the first information includes an obtaining manner of the feature information of the raw data.

In a possible implementation, the first information further includes the following types of information: a data label of the raw data and/or a priority of the raw data.

In a possible implementation, the processing manner in which the second node obtains the first information further includes an obtaining manner of the data label of the raw data.

In a possible implementation, the transceiver module is further configured to send third information to the second node, where the third information indicates a reporting configuration of the first information.

In a possible implementation, the reporting configuration includes at least one of the following: a type of the first information and a data quantity of the first information.

In a possible implementation, the transceiver module is further configured to send fourth information to the second node, where the fourth information indicates that the apparatus has a capability of performing joint processing on feature information of multiple raw data items of a same group.

In a possible implementation, the first information further includes the following type of information: group information of the raw data.

In a possible implementation, the transceiver module is further configured to: send at least one subset of the multiple synthetic data items to the second node; and
receive fifth information from the second node, where the fifth information indicates an evaluation result of at least one piece of synthetic data in the at least one subset, and the evaluation result indicates at least one piece of synthetic data that needs to be removed from the at least one subset, or indicates at least one piece of synthetic data that does not need to be removed from the at least one subset.

In a possible implementation, the evaluation result is used to screen the multiple synthetic data items to obtain at least one piece of synthetic data obtained through screening, where the at least one piece of synthetic data obtained through screening is used for the model processing.

In a possible implementation, the at least one piece of synthetic data obtained through screening is determined based on a distance between first synthetic data to be removed and another piece of synthetic data in the multiple synthetic data items, and the first synthetic data to be removed is synthetic data that needs to be removed as determined based on the fifth information.

Alternatively, this application provides a model data obtaining apparatus, where the apparatus may include a transceiver module and a processing module, and details are as follows.

The transceiver module is configured to receive sixth information from a second node, where the sixth information includes the following type of information: raw data.

The processing module is configured to generate multiple synthetic data items based on the sixth information and feature information of the raw data, where the multiple synthetic data items are used for model processing.

In a first possible implementation, the transceiver module is further configured to receive eleventh information from a third node, where the eleventh information includes the following type of information: the feature information of the raw data.

In a second possible implementation, the transceiver module is further configured to receive ninth information from the second node, where the ninth information indicates an obtaining manner in which the first node obtains the feature information of the raw data.

In a third possible implementation, the transceiver module is further configured to receive ninth information from a third node, where the ninth information indicates an obtaining manner in which the first node obtains the feature information of the raw data.

In a fourth possible implementation, the feature information of the raw data is determined based on an obtaining manner of the feature information of the raw data, and the obtaining manner of the feature information of the raw data is determined by the first node.

In a possible implementation, the transceiver module is further configured to send eighth information to the second node, where the eighth information indicates a processing manner in which the second node obtains the sixth information, and the processing manner in which the second node obtains the sixth information includes an obtaining manner of a data label of the raw data.

In a possible implementation, the transceiver module is further configured to send seventh information to the second node, where the seventh information indicates a reporting configuration of the sixth information.

Optionally, the reporting configuration includes at least one of the following: a type of the sixth information or a data quantity of the sixth information.

In a possible implementation, the transceiver module is further configured to send fourth information to the second node. The fourth information indicates that the first node has a capability of performing joint processing on feature information of multiple raw data items of a same group. The joint processing may be, for example, weighted summation of feature information of multiple raw data items of a same group.

In a possible implementation, the sixth information further includes the following type of information: group information of the raw data.

In a possible implementation, the transceiver module is further configured to send at least one subset of the multiple synthetic data items to the second node. The first node further receives fifth information from the second node. The fifth information indicates an evaluation result of at least one piece of synthetic data in the at least one subset. The evaluation result indicates at least one piece of synthetic data that needs to be removed from the at least one subset, or indicates at least one piece of synthetic data that does not need to be removed from the at least one subset.

Optionally, the evaluation result is used to screen the multiple synthetic data items, to obtain at least one piece of synthetic data obtained through screening, where the at least one piece of synthetic data obtained through screening is used for the model processing.

In a possible implementation, the at least one piece of synthetic data obtained through screening is determined based on a distance between first synthetic data to be removed and another piece of synthetic data in the multiple synthetic data items, and the first synthetic data to be removed is synthetic data that needs to be removed as determined based on the fifth information.

According to a fifth aspect, this application provides a model data obtaining apparatus, where the apparatus may include a transceiver module, and details are as follows.

The transceiver module is configured to send first information to a first node, where the first information includes the following types of information: raw data and feature information of the raw data.

In a possible implementation, the transceiver module is further configured to receive second information from the first node, where the second information indicates a processing manner in which the apparatus obtains the first information, and the processing manner includes an obtaining manner of the feature information of the raw data.

The apparatus further includes a processing module, configured to obtain the first information based on the second information.

In a possible implementation, the first information further includes the following types of information: a data label of the raw data and/or a priority of the raw data.

In a possible implementation, the processing manner further includes an obtaining manner of the data label of the raw data.

In a possible implementation, the transceiver module is further configured to receive third information from the first node, where the third information indicates a reporting configuration of the first information.

In a possible implementation, the reporting configuration includes at least one of the following: a type of the first information and a data quantity of the first information.

In a possible implementation, the transceiver module is further configured to receive fourth information from the first node, where the fourth information indicates that the first node has a capability of performing joint processing on feature information of multiple raw data items of a same group.

In a possible implementation, the first information further includes the following type of information: group information of the raw data.

In a possible implementation, the transceiver module is further configured to: receive at least one subset of multiple synthetic data items from the first node; and
send fifth information to the first node, where the fifth information indicates an evaluation result of at least one piece of synthetic data in the at least one subset, and the evaluation result indicates at least one piece of synthetic data that needs to be removed from the at least one subset, or indicates at least one piece of synthetic data that does not need to be removed from the at least one subset.

In a possible implementation, the evaluation result is determined based on a distance between at least one piece of synthetic data in the at least one subset and local data.

In a possible implementation, the evaluation result is used to screen the multiple synthetic data items to obtain at least one piece of synthetic data obtained through screening, where the at least one piece of synthetic data obtained through screening is used for model processing.

Alternatively, this application provides a model data obtaining apparatus, where the apparatus may include a transceiver module, and details are as follows.

The transceiver module is configured to send sixth information to the first node, where the sixth information includes the following type of information: raw data.

The transceiver module is further configured to send ninth information to the first node, where the ninth information indicates an obtaining manner in which the first node obtains feature information of the raw data.

In a possible implementation, the transceiver module is configured to receive eighth information from the first node, where the eighth information indicates a processing manner in which the second node obtains the sixth information, and the processing manner in which the second node obtains the sixth information includes an obtaining manner of a data label of the raw data.

In a possible implementation, the transceiver module is configured to receive seventh information from the first node, where the seventh information indicates a reporting configuration of the sixth information.

In a possible implementation, the transceiver module is configured to receive fourth information from the first node. The fourth information indicates that the first node has a capability of performing joint processing on feature information of multiple raw data items of a same group.

In a possible implementation, the transceiver module is further configured to receive at least one subset of multiple synthetic data items from the first node. The second node further sends fifth information to the first node, where the fifth information indicates an evaluation result of at least one piece of synthetic data in the at least one subset. The evaluation result indicates at least one piece of synthetic data that needs to be removed from the at least one subset, or indicates at least one piece of synthetic data that does not need to be removed from the at least one subset.

In a possible implementation, the evaluation result is determined based on a distance between at least one piece of synthetic data in the at least one subset and local data.

In a possible implementation, the evaluation result is used to screen the multiple synthetic data items to obtain at least one piece of synthetic data obtained through screening, where the at least one piece of synthetic data obtained through screening is used for model processing.

According to a sixth aspect, this application provides a model data obtaining apparatus, where the apparatus may include a transceiver module.

The transceiver module is configured to send eleventh information to a first node, where the eleventh information includes the following type of information: feature information of raw data.

Alternatively, this application provides a model data obtaining apparatus, where the apparatus may include a transceiver module.

The transceiver module is configured to send ninth information to a first node, where the ninth information indicates an obtaining manner in which the first node obtains feature information of raw data.

According to a seventh aspect, this application provides a model data obtaining apparatus, including a processor and a memory. The memory is configured to store program code, and the processor is configured to invoke the program code to perform the method provided in any possible implementation of the first aspect.

According to an eighth aspect, this application provides a model data obtaining apparatus, including a processing circuit and a memory. The memory is configured to store program code, and the processing circuit is configured to invoke the program code to perform the method provided in any possible implementation of the second aspect.

According to a ninth aspect, this application provides a model data obtaining apparatus, including a processing circuit and a memory. The memory is configured to store program code, and the processing circuit is configured to invoke the program code to perform the method provided in any possible implementation of the third aspect.

According to a tenth aspect, this application provides a model data obtaining system, including the apparatus provided in any possible implementation of the fourth aspect and the apparatus provided in any possible implementation of the fifth aspect; or including the apparatus provided in any possible implementation of the seventh aspect and the apparatus provided in any possible implementation of the eighth aspect; or including the apparatus provided in any possible implementation of the fourth aspect, the apparatus provided in any possible implementation of the fifth aspect, and the apparatus provided in any possible implementation of the sixth aspect; or including the apparatus provided in any possible implementation of the seventh aspect, the apparatus provided in any possible implementation of the eighth aspect, and the apparatus provided in any possible implementation of the ninth aspect.

According to an eleventh aspect, this application provides a computer-readable storage medium. The computer-readable storage medium stores a computer program, and the computer program is executed by a processor to implement the method provided in any possible implementation of the first aspect, the method provided in any possible implementation of the second aspect, or the method provided in any possible implementation of the third aspect.

According to a twelfth aspect, this application provides a computer program product. When the computer program product runs on a computer, the computer is caused to perform the method provided in any possible implementation of the first aspect, the method provided in any possible implementation of the second aspect, or the method provided in any possible implementation of the third aspect.

It may be understood that the apparatus according to the fourth aspect to the apparatus according to the ninth aspect, the system according to the tenth aspect, the computer-readable storage medium according to the eleventh aspect, or the computer program product according to the twelfth aspect are all configured to perform the method provided in any implementation of the first aspect, the method provided in any implementation of the second aspect, or the method provided in any implementation of the third aspect. Therefore, for beneficial effects that can be achieved, refer to beneficial effects in the corresponding method. Details are not described herein again.

### BRIEF DESCRIPTION OF DRAWINGS

The following describes accompanying drawings used in embodiments of this application.
FIG. 1 is a simplified diagram of a wireless communication system according to an embodiment of this application;
FIG. 2a is a diagram of a communication system according to an embodiment of this application;
FIG. 2b is a diagram of another communication system according to an embodiment of this application;
FIG. 3a is a diagram of a possible application framework in a communication system according to an embodiment of this application;
FIG. 3b is a diagram of another possible application framework in a communication system according to an embodiment of this application;
FIG. 4 is a diagram of an encoder and a decoder according to an embodiment of this application;
FIG. 5 is a diagram of an AI application framework according to an embodiment of this application;
FIG. 6 is a schematic flowchart of a model data obtaining method according to an embodiment of this application;
FIG. 7 is a schematic flowchart of another model data obtaining method according to an embodiment of this application;
FIG. 8 is a schematic flowchart of still another model data obtaining method according to an embodiment of this application;
FIG. 9 is a schematic flowchart of still another model data obtaining method according to an embodiment of this application;
FIG. 10 is a schematic flowchart of still another model data obtaining method according to an embodiment of this application;
FIG. 11 is a diagram of a structure of a model data obtaining apparatus according to an embodiment of this application; and
FIG. 12 is a diagram of a structure of another model data obtaining apparatus according to an embodiment of this application.

### DESCRIPTION OF EMBODIMENTS

To make objectives, technical solutions, and advantages of this disclosure clearer, the following further describes this disclosure in detail with reference to accompanying drawings.

"At least one piece (item)" in this disclosure below indicates one piece (item) or more pieces (items). "Multiple pieces (items)" mean two or more pieces (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in this disclosure to describe objects, these objects are not limited by these terms. These terms are merely used for distinguishing the objects from each other.

The terms "include", "have", and any variations thereof mentioned in descriptions of this disclosure below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in this disclosure, a term like "example" or "for example" is for representing giving an example, an illustration, or a description. Any method or design solution described by "example" or "for example" in this disclosure should not be construed as being more preferred or having more advantages than another method or design solution. Exactly, use of the word like "example" or "for example" is intended to present a related concept in a specific manner.

The technologies provided in this disclosure may be applied to various communication systems. For example, the communication system may be a fifth generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a sixth generation (6th generation, 6G) mobile communication system, or a system integrating multiple systems. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

A device in the communication system may send a signal to another device or receive a signal from another device. The signal may include information, signaling, data, and the like. The device may be replaced with an entity, a network entity, a network element, a communication device, a communication module, a node, a communication node, or the like. In this disclosure, the device is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes multiple terminal devices, the multiple terminal devices may send signals to each other. In other words, both a signal sending device and a signal receiving device may be terminal devices.

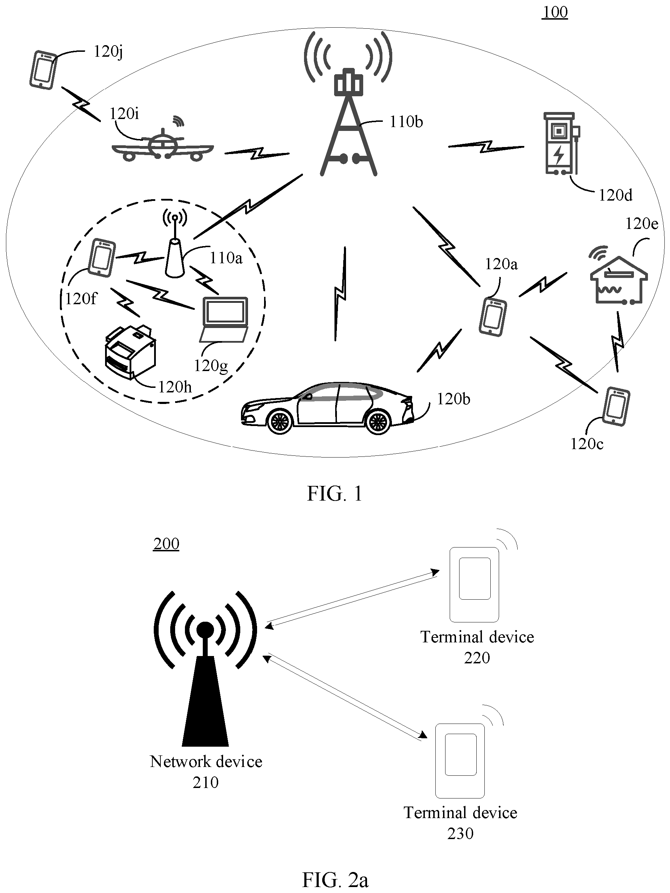

An information generation method provided in embodiments of this application may be applied to a wireless communication system such as 5G, 6G, or satellite communication. Refer to FIG. 1. FIG. 1 is a simplified diagram of a wireless communication system according to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more communication devices (120a to 120j, which are collectively referred to as 120) may be interconnected or connected to one or more network devices (110a and 110b, which are collectively referred to as 110) in the radio access network 100. Optionally, FIG. 1 is merely a diagram. The wireless communication system may further include another device, for example, may further include a core network device, a wireless relay device, and/or a wireless backhaul device, which are not shown in FIG. 1.

Optionally, in an actual application, the wireless communication system may include multiple network devices (also referred to as access network devices), or may include multiple communication devices. One network device may simultaneously serve one or more communication devices. One communication device may also simultaneously access one or more network devices. Quantities of communication devices and network devices included in the wireless communication system are not limited in this embodiment of this application.

The network device may be an entity that is configured to transmit or receive a signal on a network side. The network device may be an access device via which the communication device accesses the wireless communication system in a wireless manner. For example, the network device may be a base station. The base station may cover any of the following names in a broad sense, or may be replaced with the following names: for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmission reception point, TRP), a transmission point (transmission point, TP), a master eNodeB (Master eNodeB, MeNB), a secondary eNodeB (secondary eNodeB, SeNB), a multi-standard radio (multi-standard radio, MSR) node, a home base station, a network controller, an access node, a radio node, an access point (AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, an analogue, or a combination thereof. Alternatively, the network device may be a communication module, a modem, or a chip disposed in the foregoing device or apparatus. Alternatively, the network device may be a mobile switching center, a device that undertakes a base station function in device-to-device (Device-to-Device, D2D) communication, vehicle-to-everything (vehicle-to-everything, V2X) communication, or machine-to-machine (machine-to-machine, M2M) communication, a network side device in a 6G network, a device that undertakes a base station function in a future communication system, or the like. The network device may support networks using a same access technology or different access technologies. A specific technology and a specific device form used by the network device are not limited in embodiments of this application.

The network device may be stationary or mobile. For example, the base stations 110a and 110b are stationary and are responsible for wireless transmission and reception in one or more cells from the communication device 120. A helicopter or an uncrewed aerial vehicle 120i shown in FIG. 1 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In this disclosure, a communication apparatus configured to implement functions of the access network may be an access network device, may be a network device having some functions of the access network, or may be an apparatus that can support implementation of functions of the access network, for example, a chip system, a hardware circuit, a software module, or a combination of a hardware circuit and a software module. The apparatus may be mounted in the access network device or used in combination with the access network device. In the method disclosed in this disclosure, description is given by using an example in which the communication apparatus configured to implement functions of the access network device is the access network device.

The communication device may be an entity, such as a mobile phone, configured to receive or transmit a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device D2D, vehicle-to-everything V2X, peer-to-peer (peer-to-peer, P2P), machine-to-machine M2M, machine type communication MTC, Internet of Things IoT, virtual reality (virtual reality, VR), augmented reality (augmented reality, AR), industrial control, self-driving, telemedicine, smart grid, smart furniture, smart office, smart wearables, smart transportation, smart city, drones, robots, remote sensing, passive sensing, positioning, navigation and tracking, and autonomous delivery and mobility. Some examples of the communication device 120 are 3GPP standard user equipment (user equipment, UE), a stationary device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a virtual reality VR device, an augmented reality AR device, a wireless terminal in industrial control (industrial control), a terminal in an internet of vehicles system, a wireless terminal in self-driving (self-driving), a wireless terminal in smart grid (smart grid), a wireless terminal in transportation safety (transportation safety), a wireless terminal in smart city (smart city), for example, a smart fuel dispenser, a terminal device on a high-speed train, and a wireless terminal in smart home (smart home), for example, a smart speaker, a smart coffee machine, or a smart printer. The communication device 120 may be a wireless device in the foregoing various scenarios or an apparatus disposed in the wireless device, for example, a communication module, a modem, or a chip in the foregoing device. The communication device may alternatively be referred to as a terminal, a terminal device, user equipment UE, a mobile station (mobile station, MS), a mobile terminal (mobile terminal, MT), or the like. The communication device may alternatively be a communication device in a future wireless communication system. The communication device may be used in a dedicated network device or a general-purpose device. A specific technology and a specific device form used by the communication device are not limited in embodiments of this application.

Optionally, the communication device may be configured to serve as a base station. For example, the UE may serve as a scheduling entity that provides sidelink signals between UE in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this disclosure, a communication apparatus configured to implement functions of the communication device may be a terminal device, may be a terminal device having some functions of the communication device, or may be an apparatus that can support implementation of functions of the communication device, for example, a chip system. The apparatus may be installed in the terminal device or used together with the terminal device. In this disclosure, the chip system may include a chip, or may include a chip and another discrete component. In the technical solutions provided in this disclosure, an example in which the communication apparatus is the terminal device or the UE is used for description.

Optionally, the wireless communication system usually includes a cell, the base station provides cell management, and the base station provides a communication service for multiple mobile stations (mobile station, MS) in the cell. The base station includes a baseband unit (baseband unit, BBU) and a remote radio unit (remote radio unit, RRU). The BBU and the RRU may be placed in different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

It may be understood that this disclosure may be applied between a network device and a communication device, between network devices, or between communication devices, that is, between a primary device and a secondary device. The primary device may be a network device or a communication device. When the primary device is a network device, the secondary device may be another network device or a communication device. When the primary device is a communication device, the secondary device may be another communication device.

The following describes the solutions by using an example in which the primary device is a network device, for example, an access network device, and the secondary device is a communication device, for example, a terminal device. A communication direction corresponding to downlink is sending from the primary device to the secondary device, and a communication direction corresponding to uplink is sending from the secondary device to the primary device.

### Protocol layer structure between an access network device and a terminal device

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as the PDCP layer, the RLC layer, the MAC layer, and the physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

Data transmission between the access network device and the terminal device is used as an example. The data transmission needs to pass through a user plane protocol layer, for example, the SDAP layer, the PDCP layer, the RLC layer, the MAC layer, or the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used to forward user data, for example, forward uplink data received from the application layer to the SDAP layer, or forward downlink data received from the SDAP layer to the application layer.

### Structure of an access network device

The access network device may include a central unit (central unit, CU) and a distributed unit (distributed unit, DU). Multiple DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on a protocol layer of a wireless network. For example, functions of a PDCP layer and a protocol layer above the PDCP layer are set on the CU, and functions of a protocol layer below the PDCP layer (for example, an RLC layer and a MAC layer) are set on the DU. For another example, functions of a protocol layer above a PDCP layer are set on the CU, and functions of the PDCP layer and a protocol layer below the PDCP layer are set on the DU.

It may be understood that processing function division of the CU and the DU based on the protocol layers is merely an example, and there may be other division. For example, the CU or the DU may have functions of more protocol layers through division. For another example, the CU or the DU may alternatively have some processing functions of protocol layers through division. In a design, a part of functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be disposed on a network side to facilitate centralized management. In another design, an RU of the DU is disposed remotely. The RU has a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When used for sending, a function of the PHY layer may include cyclic redundancy check (cyclic redundancy check, CRC) code addition, channel encoding, rate matching, scrambling, modulation, layer mapping, precoding, resource mapping, physical antenna mapping, and/or radio frequency sending functions. When used for reception, a function of the PHY layer may include CRC, channel decoding, de-rate matching, descrambling, demodulation, layer de-mapping, channel detection, resource de-mapping, physical antenna de-mapping, and/or radio frequency receiving functions. The higher-layer function of the PHY layer may include a part of functions of the PHY layer. For example, the part of functions are closer to the MAC layer. The lower-layer function of the PHY layer may include another part of functions of the PHY layer. For example, the part of functions are closer to the radio frequency function. For example, the higher-layer function of the PHY layer may include CRC code addition, channel encoding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel encoding, rate matching, scrambling, modulation, layer mapping, and precoding. The lower-layer function of the PHY layer may include resource mapping, physical antenna mapping, and radio frequency sending functions.

For example, a function of the CU may be implemented by one entity, or may be implemented by different entities. For example, the functions of the CU may be further divided. To be specific, a control plane and a user plane are separated and implemented by different entities, which are respectively a CU control plane entity (namely, a CU-CP entity) and a CU user plane entity (namely, a CU-UP entity). The CU-CP entity and the CU-UP entity may be coupled to the DU to jointly complete functions of the access network device.

In the foregoing architecture, signaling generated by the CU may be sent to a terminal device via the DU, or signaling generated by a terminal device may be sent to the CU via the DU. For example, signaling at the RRC layer or PDCP layer is finally processed into signaling at the physical layer and sent to the terminal device, or is converted from signaling received from the physical layer. Based on such architectures, the signaling of the RRC layer or PDCP layer may be considered to be sent by using the DU, or sent by using the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by the modules also fall within the protection scope of this disclosure.

The access network device may support one or more categories of fronthaul interfaces, and different fronthaul interfaces correspond to DUs and RUs that have different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is of another category, relative to the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition, are moved from the DU to the RU for implementation, and for uplink, one or more of digital beamforming (beamforming, BF) or fast Fourier transform (fast Fourier transform, FFT)/cyclic prefix (cyclic prefix, CP) removal, are moved from the DU to the RU for implementation. In a possible implementation, the interface may be an enhanced common public radio interface (enhanced common public radio interface, eCPRI). In an eCPRI architecture, there are different split options between the DU and RU, which correspond to different categories (category, Cat) of eCPRIs, such as eCPRI Cat A, B, C, D, E, or F.

eCPRI Cat A is used as an example. For downlink transmission, with a split at layer mapping, the DU is configured to implement layer mapping and one or more functions prior to layer mapping (that is, one or more of encoding, rate matching, scrambling, modulation, and layer mapping), and another function after layer mapping (for example, resource element (resource element, RE) mapping, digital beamforming (beamforming, BF), or inverse fast Fourier transform (inverse fast Fourier transform, IFFT)/cyclic prefix (cyclic prefix, CP) addition) is moved to the RU for implementation. For uplink transmission, with a split at RE demapping, the DU is configured to implement demapping and one or more functions prior to demapping (that is, one or more of decoding, de-rate matching, descrambling, demodulation, inverse discrete Fourier transform (inverse discrete Fourier transform, IDFT), channel equalization, and RE demapping), and another function after demapping (for example, one or more of digital BF or fast Fourier transform (fast Fourier transform, FFT)/CP removal) is moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an open radio access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support a network device in implementing the function, for example, a chip system, a hardware circuit, a software module, or a combination of a hardware circuit and a software module. The apparatus may be mounted in the network device or used in combination with the network device. In embodiments of this application, only an example in which the apparatus configured to implement the function of the network device is a network device is used for description, which constitutes no limitation on the solutions in embodiments of this application.

The network device and the terminal device may be deployed on land, including indoor, outdoor, handheld, or vehicle-mounted; may be deployed on water; or may be deployed on an airplane, a balloon, and a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

It should be understood that a quantity and types of devices in the communication system shown in FIG. 1 are merely used as an example, and this disclosure is not limited thereto. In actual application, the communication system may further include more terminal devices and more access network devices, and may further include another network element, for example, may include a core network device and/or a network element configured to implement an artificial intelligence function. The network element configured to implement the artificial intelligence function may be a RAN intelligent controller (RAN intelligent controller, RIC). FIG. 2a is a diagram of a communication system applicable to an embodiment of this application. As shown in FIG. 2a, the communication system 200 may include at least one network device, for example, a network device 210 shown in FIG. 2a. The communication system 200 may further include at least one terminal device, for example, a terminal device 220 and a terminal device 230 shown in FIG. 2a. The network device 210 may communicate with the terminal device (for example, the terminal device 220 and the terminal device 230) through a radio link. Communication devices, for example, the network device 210 and the terminal device 220, in the communication system may communicate with each other using a multi-antenna technology.

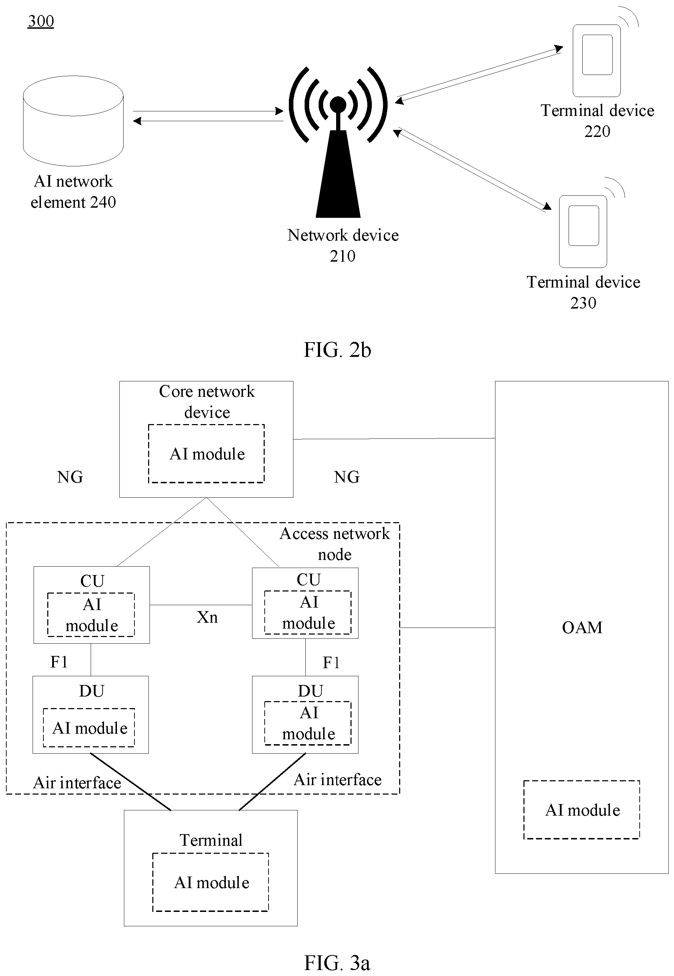

FIG. 2b is a diagram of another communication system applicable to an embodiment of this application. Compared with the communication system 200 shown in FIG. 2a, the communication system 300 shown in FIG. 2b further includes an AI network element 240. The AI network element 240 is configured to perform an AI-related operation, for example, constructing a training dataset or training an AI model.

In a possible implementation, the network device 210 may send data related to training of the AI model to the AI network element 240, and the AI network element 240 constructs the training dataset and trains the AI model. For example, the data related to the training of the AI model may include data reported by a terminal device. The AI network element 240 may send a result of an operation related to the AI model to the network device 210, and the network device 210 forwards the result to the terminal device. For example, the result of the operation related to the AI model may include at least one of the following: a trained AI model, an evaluation result or a test result for the model, or the like. For example, a part of the trained AI model may be deployed on the network device 210, and the other part is deployed on the terminal device. Alternatively, the trained AI model may be deployed on the network device 210. Alternatively, the trained AI model may be deployed on the terminal device.

It should be understood that, in FIG. 2b, that the AI network element 240 is directly connected to the network device 210 is used merely as an example for description. In another scenario, the AI network element 240 may alternatively be connected to the terminal device. Alternatively, the AI network element 240 may be connected to both the network device 210 and the terminal device. Alternatively, the AI network element 240 may be connected to the network device 210 via a third-party network element (also referred to as a third-party device or a third-party entity). A connection relationship between the AI network element and another network element is not limited in embodiments of this application.

The AI network element 240 may alternatively be disposed on a network device and/or a terminal device as a module, for example, disposed on the network device 210 or the terminal device shown in FIG. 2a.

It should be noted that, FIG. 2a and FIG. 2b are merely simplified diagrams of examples for ease of understanding. For example, the communication system may further include another device, for example, may further include a wireless relay device and/or a wireless backhaul device, which are/is not shown in FIG. 2a and FIG. 2b. During actual application, the communication system may include multiple network devices, and may also include multiple terminal devices. Quantities of network devices and terminal devices included in the communication system are not limited in embodiments of this application.

To support an AI technology in a wireless network, an AI node may be further introduced into the network.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, or the like.

It can be understood that a quantity of AI nodes is not limited in this application. For example, when there are multiple AI nodes, the multiple AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

FIG. 3a is a diagram of a possible application framework in a communication system. As shown in FIG. 3a, network elements in the communication system are connected to each other through an interface (for example, NG or Xn) or an air interface. One or more AI modules (for clarity, only one AI module is shown in FIG. 3a) are disposed in one or more of these network element nodes, for example, the core network device, the access network (radio access network, RAN) node, the terminal, or the OAM. The access network node may serve as an independent RAN node, or may include multiple RAN nodes, for example, include a CU and a DU. One or more AI modules may be further disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of a neural network, a connection relationship between layers, a weight value of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

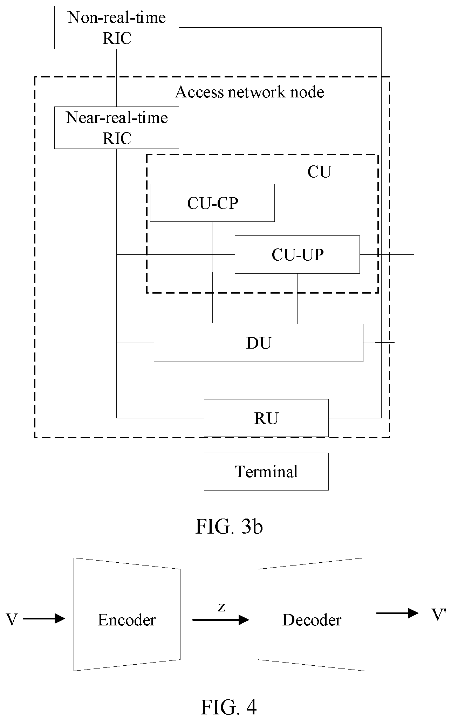

FIG. 3b is a diagram of another possible application framework in a communication system. As shown in FIG. 3b, the communication system includes a RAN intelligent controller (RAN intelligent controller, RIC). For example, the RIC may be the AI module shown in FIG. 3a, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a granularity of seconds. A real-time RIC mainly processes near-real-time information, for example, delay-sensitive data. A delay of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a server (for example, a cloud server), a core network device, or another network device.

It may be understood that all or some of functions implemented by one or more of the terminal device, the access network device, the core network device, or the network element configured to implement the artificial intelligence function may be virtualized, to be specific, implemented by one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over the top (over the top, OTT) system.

The method provided in this disclosure may be used for communication between the access network device and the terminal device, and may also be used for communication between other communication devices, for example, communication between a macro base station and a micro base station on a wireless backhaul link, or communication between two terminal devices on a sidelink (sidelink, SL). This is not limited.

For ease of understanding the solutions in embodiments of this application, the following describes terms that may be used in embodiments of this application.

### (1) AI model:

The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

### (2) Two-side model:

The two-side model may also be referred to as a bilateral model, a cooperative model, a dual model, a two-side (two-side) model, or the like. The two-side model is a model including multiple submodels. The multiple submodels included in the model need to match each other. The multiple submodels may be deployed on different nodes.

In a possible design, embodiments of this application relate to an encoder for CSI compression and a decoder for compressed CSI recovery. The encoder and the decoder are used in cooperation. It can be understood that the encoder and the decoder are AI models that match each other. One encoder may include one or more AI models, and a decoder matching the encoder also includes one or more AI models. An encoder and a decoder that are used in cooperation include a same quantity of AI models, and AI models included in the encoder are in one-to-one correspondence with AI models included in the decoder.

In a possible design, a set of encoder (encoder) and decoder (decoder) that are used in cooperation may be specifically two parts of a same auto-encoder (auto-encoder, AE), for example, as shown in FIG. 4. An AE model in which an encoder and a decoder are separately deployed on different nodes is a typical bilateral model. The encoder and the decoder of the AE model are usually an encoder and a decoder that are jointly trained and that are used in cooperation. The encoder processes an input V to obtain a processed result z, and the decoder can decode the output z of the encoder into an expected output V'.

The auto-encoder is an unsupervised learning neural network, and is characterized by using input data as a label. Therefore, the auto-encoder may also be understood as a self-supervised learning neural network. The autoencoder may be configured to compress and recover data. For example, the encoder in the auto-encoder may compress (encode) data A to obtain data B, and the decoder in the auto-encoder may decompress (decode) the data B to recover the data A. Alternatively, this may be understood as that the decoder is an inverse operation of the encoder.

For example, the AI model in embodiments of this application may include an encoder and a decoder. The encoder and the decoder are used in cooperation. It can be understood that the encoder and the decoder are AI models that match each other. The encoder and the decoder may be separately deployed on a terminal device and a network device.

Alternatively, the AI model in embodiments of this application may be a single-side model, and the AI model may be deployed on a terminal device or a network device.

### (3) Neural network (neural network, NN):

The neural network is a specific implementation form of AI or machine learning. According to a universal approximation theorem, the neural network can approximate any continuous function in theory, so that the neural network has a capability of learning any mapping.

The neural network may include neurons. The neuron may be an operation unit that uses xs and an intercept of 1 as an input. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

For example, a type of an AI model is a neural network. The AI model in this disclosure may be a deep neural network (deep neural network, DNN). Based on network construction modes, the DNN may include a feedforward neural network (feedforward neural network, FNN), a convolutional neural network (convolutional neural network, CNN), a recurrent neural network (recurrent neural network, RNN), and the like.

### (4) Training dataset and inference data:

In the machine learning field, a ground truth (ground truth) is usually considered as accurate data or true data.

The training dataset is used to train an AI model. The training dataset may include an input of the AI model, or include an input and a target output of the AI model. The training dataset includes one or more training data items. The training data may include a training sample input into the AI model, or may also include the target output of the AI model. The target output may also be referred to as a label, a sample label, or a label sample. The label is a ground truth.

In the communication field, the training dataset may include simulated data collected by a simulation platform, may also include experimental data collected in an experiment scenario, or may also include field measured data collected in an actual communication network. Geographical environments and channel conditions in which data is generated vary. For example, indoor or outdoor environments, moving speeds, frequency bands, or antenna configurations vary. Therefore, collected data may be classified when the data is obtained. For example, data with a same channel propagation environment and a same antenna configuration is classified into one type.

Model training is essentially learning some features of training data from the training data. During training of an AI model (for example, a neural network model), because an output of the AI model is expected to be as close as possible to a value that is actually expected to be predicted, a current predicted value of the network may be compared with a target value that is actually expected, and then a weight vector of each layer of the AI model is updated based on a difference between the two (definitely, an initialization process is usually performed before the first update, that is, a parameter is preconfigured for each layer of the AI model). For example, if the predicted value of the network is larger, the weight vector is adjusted to obtain a smaller predicted value. The weight vector is continuously adjusted until the AI model can predict the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a greater difference. In this case, the training of the AI model is a process of minimizing the loss, so that a value of the loss function is less than a threshold, or the value of the loss function meets a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of the neuron.

The inference data may be used as an input of a trained AI model for inference by the AI model. During model inference, the inference data may be input into the AI model to obtain a corresponding output, namely, an inference result.

### (5) AI model design:

The AI model design mainly includes a data collection phase (for example, collection of training data and/or inference data), a model training phase, and a model inference phase, and may further include an inference result application phase.

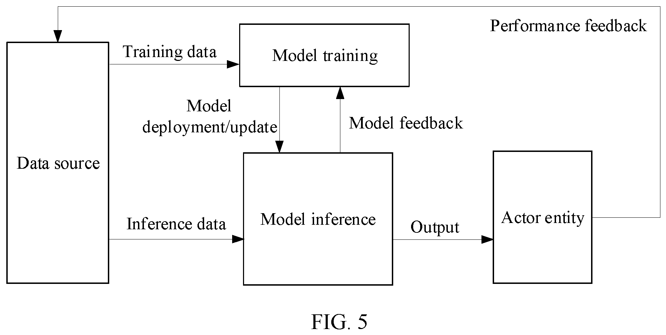

FIG. 5 shows an AI application framework.

In the data collection phase, a data source (data source) is used to provide a training dataset and inference data. In the model training phase, an AI model is obtained through analysis or training by using training data (training data) provided by the data source. The AI model represents a mapping relationship between an input and an output of the model. Obtaining the AI model through learning by using a model training host is equivalent to obtaining the mapping relationship between the input and the output of the model through learning by using the training data. In the model inference phase, the AI model trained in the model training phase is used to perform inference based on the inference data provided by the data source, to obtain an inference result. This phase may also be understood as inputting the inference data into the AI model to obtain an output by using the AI model. The output is the inference result. The inference result may indicate a configuration parameter used (executed) by an execution object, and/or an operation performed by the execution object. The inference result is released in the inference result application phase. For example, the inference result may be centrally planned by an actor (actor) entity. For example, the actor entity may send the inference result to one or more execution objects (for example, a network device or a terminal device) for execution. For another example, the actor entity may further feed back performance of the model to the data source, to facilitate subsequent update training of the model.

It may be understood that, a communication system may include a network element having an artificial intelligence function. The foregoing phases related to AI model design may be performed by one or more network elements having the artificial intelligence function. In a possible design, the AI function (for example, an AI module or an AI entity) may be configured in an existing network element in the communication system to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, an AI entity, or the like. The name is not limited in embodiments of this application. For example, the AI network element may be directly connected to a network device in the communication system, or may be indirectly connected to the network device via a third-party network element. The third-party network element may be a core network element such as an authentication management function (authentication management function, AMF) network element or a user plane function (user plane function, UPF) network element, an operation, administration, and maintenance (operation administration and maintenance, OAM) network element, a server (for example, a cloud server), an over the top (over the top, OTT) device, or another network element. This is not limited. For example, the independent AI network element, AI entity, or AI node may be deployed on one or more of a network device side, a terminal device side, or a core network side, and optionally, may be deployed on a server, for example, a cloud server, an OTT device, or another device. For example, the AI network element 240 is introduced into the communication system shown in FIG. 2b. It may be understood that the AI module, the AI entity, the AI network element, or the AI node may be configured to perform one or more of AI functions. The AI function may include AI model processing, for example, AI model training and/or update, AI model monitoring, AI model management, for example, AI model registration and/or deregistration, or AI model application inference.

Training processes of different models may be deployed on different devices or nodes, or may be deployed on a same device or node. Inference processes of different models may be deployed on different devices or nodes, or may be deployed on a same device or node. For example, a model training phase is performed by a terminal device. After training an encoder and a decoder that match each other, the terminal device may send a model parameter of the decoder to a network device. For example, a model training phase is performed by a network device. After training an encoder and a decoder that match each other, the network device may indicate a model parameter of the encoder to a terminal device. For example, a model training phase is performed by an independent AI network element. After training an encoder and a decoder that match each other, the AI network element may send a model parameter of the encoder to a terminal device, and send a model parameter of the decoder to a network device. Then a model inference phase corresponding to the encoder is performed on the terminal device, and a model inference phase corresponding to the decoder is performed on the network device.

The model parameter may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It may be understood that, the input dimension may be a size of a piece of input data. For example, when the input data is a sequence, an input dimension corresponding to the sequence may indicate a length of the sequence. The quantity of input ports may be a quantity of input data. Similarly, the output dimension may be a size of a piece of output data. For example, when the output data is a sequence, an output dimension corresponding to the sequence may indicate a length of the sequence. The quantity of output ports may be a quantity of output data.

### (6) Channel information:

In a communication system (for example, an LTE communication system or an NR communication system), a network device needs to determine, based on channel information, configurations such as a resource, an MCS, and precoding that are used to schedule a downlink data channel for a terminal device. It may be understood that the channel information may also be referred to as channel state information (channel state information, CSI) or channel environment information, and is information that can reflect a channel characteristic and channel quality. A meaning of CSI in this application is broader than a meaning of CSI in a conventional solution, and is not limited to a channel quality indicator (channel quality indicator, CQI), a precoding matrix indicator (precoding matrix indicator, PMI), a rank indicator (rank indicator, RI), or a CSI-RS resource indicator (CSI-RS resource indicator, CRI). The CSI may alternatively be one or more of channel response information (for example, a channel response matrix), weight information corresponding to a channel response, reference signal received power (reference signal received power, RSRP), or a signal to interference plus noise ratio (signal to interference plus noise ratio, SINR).

CSI measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. The CSI-RS, the SSB, the DMRS, and the like may be used for measuring downlink CSI. The SRS, the DMRS, and the like may be used for measuring uplink CSI.

An FDD communication scenario is used as an example. In the FDD communication scenario, an uplink channel and a downlink channel are not reciprocal, in other words, reciprocity between the uplink channel and the downlink channel cannot be ensured. Therefore, the network device usually sends a downlink reference signal to the terminal device, and the terminal device performs channel measurement or interference measurement based on the received downlink reference signal to estimate downlink CSI. The terminal device generates a CSI report in a manner predefined in a protocol or in a manner configured by the network device, and feeds back the CSI report to the network device, so that the network device obtains the downlink CSI.

For example, the CSI may include at least one of the following: a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), and the like. The signal to interference plus noise ratio may also be referred to as a signal-to-interference-plus-noise ratio.

The RI indicates a quantity of layers of downlink transmission recommended by the terminal device. The CQI indicates a modulation and coding scheme that is determined by the terminal device and that can be supported in a current channel condition. The PMI indicates precoding recommended by the terminal device. A quantity of layers of the precoding indicated by the PMI corresponds to the RI.

It should be understood that, the RI, the CQI, the PMI, and the like that are indicated in the CSI report are merely recommended values of the terminal device. The network device may perform downlink transmission based on a part or all of information indicated in the CSI report. Alternatively, the network device may perform downlink transmission without referring to the information indicated in the CSI report.

An AI technology is introduced into a wireless communication network to obtain an AI model-based CSI feedback mode. The terminal device compresses and feeds back CSI by using an AI model, and the network device recovers compressed CSI by using an AI model. A sequence (for example, a bit sequence) is transmitted in AI-based CSI feedback, and overheads are lower than overheads of CSI in conventional CSI feedback.

FIG. 4 is used as an example. In FIG. 4, the encoder may be a CSI generator, and the decoder may be a CSI reconstructor. The encoder may be deployed on the terminal device, and the decoder may be deployed on the network device. The terminal device may generate CSI feedback information z based on CSI raw information V by using the encoder. The terminal device reports a CSI report, where the CSI report may include the CSI feedback information z. The network device may reconstruct CSI information by using the decoder to obtain CSI recovery information V'.

The CSI raw information V may be obtained by the terminal device through CSI measurement. For example, the CSI raw information V may include a channel response of a downlink channel or an eigenvector matrix (a matrix including eigenvectors) of a downlink channel. The encoder processes the eigenvector matrix of the downlink channel to obtain the CSI feedback information z. In other words, performing a compression operation and/or a quantization operation on an eigenmatrix based on a codebook in a related solution is replaced with the operation of processing the eigenmatrix by the encoder to obtain the CSI feedback information z. The terminal device reports the CSI feedback information z. The network device processes the CSI feedback information z by using the decoder to obtain the CSI recovery information V'.

The following further describes examples of a training process and an inference process of the AI model in embodiments of this application.

Training data for training the AI model includes a training sample and a sample label. For example, the training sample is channel information determined by the terminal device, and the sample label is real channel information, namely, ground truth CSI. When the encoder and the decoder belong to a same auto-encoder, the training data may include only the training sample, in other words, the training sample is the sample label.

In the wireless communication field, the ground truth CSI may be high-precision CSI.

A specific training process is as follows: A model training node uses the encoder to process channel information, that is, the training sample, to obtain channel feedback information, such as the CSI feedback information, and uses the decoder to process the feedback information, to obtain recovered channel information, that is, channel recovery information, such as the CSI recovery information, then calculates a difference between the channel recovery information and a corresponding sample label, that is, a value of a loss function, and updates parameters of the encoder and the decoder based on the value of the loss function, to minimize the difference between the recovered channel information and the corresponding sample label, that is, minimize the loss function. For example, the loss function may be a minimum mean square error (mean square error, MSE) or a cosine similarity. The foregoing operations may be repeated to obtain an encoder and a decoder that meet a target requirement. The model training node may be the terminal device, the network device, or another network element with an AI function in the communication system.

It should be understood that the foregoing example in which the AI model is used for CSI compression is merely used for description, and during CSI feedback, the AI model may alternatively be used in another scenario. For example, the AI model may be used for CSI prediction, to be specific, predicting channel information at one or more future moments based on channel information measured at one or more historical moments. A specific purpose of the AI model in the CSI feedback scenario is not limited in embodiments of this application.

It should be understood that, in this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined based on the information C alone, and also includes that the information D is determined based on the information C and other information. In addition, that information C is used to determine information D may further include a case of indirect determining. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for sending the information and the destination end. However, the destination end may understand valid information from the source end. Similar descriptions in this application may be understood similarly, and details are not described herein.

The following describes in detail the method in embodiments of this application.

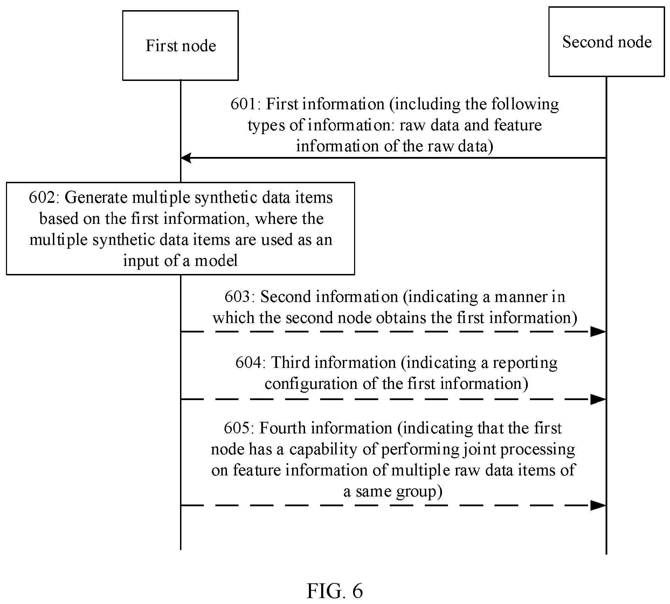

FIG. 6 is a schematic flowchart of a model data obtaining method according to an embodiment of this application. Optionally, the method may be applied to the foregoing model data obtaining system, for example, the model data obtaining system shown in FIG. 1. It may be understood that the example shown in FIG. 6 is illustrated by using an example in which a first node (a data synthesis node, or may be referred to as a central node, a first entity, or the like) and a second node (a data provisioning node, or may be referred to as a to-be-served node, a second entity, or the like) are execution bodies of the interaction. Further, a model processing (for example, model training or update) node and a model utilization (for example, model inference) node may be included. The model processing node may be the first node, or may be another node. The model utilization node may be the second node, may be another node, or the like. The model data obtaining method shown in FIG. 6 may include steps 601 to 602. Steps 601 and 602 are specifically as follows.

601: A second node sends first information to a first node, where the first information includes the following types of information: raw data and feature information of the raw data. Correspondingly, the first node receives the first information.

For example, the first node may be a data synthesis node, or may be referred to as a data generation node, a central node, a first entity, or the like. The second node may be a data provisioning node, or may be referred to as a to-be-served node, a second entity, or the like. Optionally, the first node is an access network device, and the second node is a terminal device.

The raw data is field measured data that is not compressed or has no information loss. The second node provides the raw data for the first node, so that synthetic data generated by the first node and the raw data have a same dimension and same precision. The synthetic data is data that is not created artificially and that simulates real-world data. The synthetic data is created by computational algorithms and simulations based on generative artificial intelligence technologies. A synthetic dataset and actual data on which the synthetic dataset is based have same mathematical properties, but do not have same information.

The feature information of the raw data is information obtained by performing feature extraction on the raw data. The feature information of the raw data extracts key information in the raw data. The second node provides the feature information of the raw data for the first node, so that a generation model can understand features in terms of which the generated data should be similar to the raw data.

The feature information of the raw data may include feature quantity information. Alternatively, the feature information of the raw data includes not only feature quantity information, but also feature information corresponding to a feature quantity. For example, for channel information, the feature quantity information may be channel angle distribution, channel delay distribution, or the like; and the feature information corresponding to the feature quantity may be a value of the channel angle distribution, a value of the channel delay distribution, or the like.

A type of the first information is a type of information included in the first information. For example, when the type of the first information is A, the first information includes the raw data and the feature information of the raw data. When the type of the first information is B, the first information includes the raw data. When the type of the first information is C, the first information includes the feature information of the raw data.

Optionally, the first information further includes at least one of the following types of information: a priority of the raw data or a data label of the raw data.

The priority of the raw data is reported, so that the first node determines, based on a priority or a probability of each piece of raw data, a quantity of to-be-generated synthetic data similar to the raw data, and the like, to enable consistency between distribution of the synthetic data and an expectation, for example, consistency between the distribution of the synthetic data and a scenario in which the raw data is applied. For example, channel information is used as an example. If the second node is in an outdoor environment, where blockage from a base station to user equipment is less than indoor blockage, a higher priority may be assigned to field measured channel information of a radio signal transmitted mainly on a line-of-sight (line-of-sight, LOS) path, and a lower priority may be assigned to a field measured channel of a radio signal transmitted mainly on a non-line-of-sight (non-line-of-sight, NLOS) path, so that synthetic channel information is primarily characterized by a sparse channel on an LOS path.

The data label of the raw data may be understood as a category to which the raw data belongs that is obtained by classifying the raw data. For example, if the raw data is classified by scenarios, the label is a scenario classification label.

Data labeling (or data annotating) is a part of a preprocessing phase during development of a machine learning (ML) model. Data labeling identifies raw data (such as images, text files, and videos), and then one or more data labels may be added to the raw data, to specify a context of the model and help the machine learning model make accurate predictions. Data labeling supports a variety of machine learning and deep learning use cases, including computer vision and natural language processing (NLP).

A value of the priority of the raw data may be a predefined P level. For example, a meaning of each priority level may be predefined. For example, for raw data whose priority level is P1, the generation model generates N1 synthetic data items similar to the raw data whose priority level is P1, and for raw data whose priority level is P2, the generation model generates N2 synthetic data items similar to the raw data whose priority level is P2. Alternatively, a quantity of synthetic data that is generated by using the generation model and that is similar to raw data whose priority level is P1 is x1, a quantity of synthetic data that is generated by using the generation model and that is similar to raw data whose priority level is P2 is x2, and a ratio of x1 to x2 is equal to a ratio of N1 to N2, where N1 and N2 are predefined values.

For example, the second node sends the first information to the first node, where the first information includes the raw data, the feature information of the raw data, and the data label of the raw data. For example, the raw data is channel state information. The feature information of the raw data may be an extracted channel eigenvector (one or more eigenvectors obtained by performing singular value decomposition (Singular Value Decomposition, SVD) on an original channel) or compressed information obtained by compressing a channel eigenvector. The data label of the raw data may be channel quality information (a channel quality indicator (Channel Quality Indication, CQI), a rank indicator (Rank Indicator, RI), or the like), scenario information (channel NLOS/LOS classification information, user channel high/medium/low speed classification information, or other scenario classification information), or the like.

The second node sends the first information to the first node, so that the first node generates multiple synthetic data items based on the first information. The second node uses the feature information of the raw data as a condition for synthesizing data, so that the synthetic data simulates the raw data in some specific feature dimensions, improving diversity of the synthetic data and improving accuracy of the synthetic data.

In a possible implementation, the method may further include step 603: The first node sends second information to the second node. The second information indicates a manner in which the second node obtains the first information, for example, one or more of an obtaining approach, an obtaining source, or a parameter related to an obtaining approach or source. For example, when the first information includes the feature information of the raw data, the manner in which the second node obtains the first information includes an obtaining manner of the feature information of the raw data. In other words, the first node indicates the obtaining manner of the feature information of the raw data to the second node, so that the second node processes the raw data based on the obtaining manner of the feature information of the raw data, to obtain the feature information of the raw data.

For example, the obtaining manner of the feature information of the raw data may be D1: extracting N eigenvectors of the raw data, or D2: extracting N eigenvectors from eigenvectors corresponding to top M largest eigenvalues of a matrix of the raw data. For another example, D3: the obtaining manner of the feature information of the raw data is obtaining compressed information by using an R16/R17 codebook. For another example, D4: the obtaining manner of the feature information of the raw data is obtaining compressed information by using an AI-based encoder. For still another example, the obtaining manner of the feature information of the raw data may alternatively be a feature quantity, to indicate the second node to calculate feature information corresponding to a corresponding feature quantity. Specifically, the second information may include an obtaining manner identifier (for example, D1/D2/D3/D4), or may include a parameter in an obtaining manner (for example, for the manner D1, a quantity N of eigenvectors may be indicated; and for the manner D4, an identifier of the AI encoder may be indicated).

Optionally, when the first information includes the raw data, the manner in which the second node obtains the first information includes an obtaining manner of the raw data. For example, the obtaining manner of the raw data may be obtaining specific data within a specified time period, where the specified time period may be, for example, from 9:00 to 15:00 in a day, and the specific data may be, for example, temperature data, humidity data, or text data. For another example, the obtaining manner of the raw data may alternatively be obtaining raw data of a preset area by using a preset sensor. The preset sensor may be, for example, a camera or a lidar.

Optionally, when the first information includes the data label of the raw data, the manner in which the second node obtains the first information further includes an obtaining manner of the data label of the raw data. For example, the second information indicates a manner or criterion used by the second node to determine the data label of the data. Channel information is used as an example. E1: indicates that the data label is determined based on sparsity (for example, a channel label is determined as LOS or NLOS based on a threshold of channel sparsity); E2: the data label is determined based on delay distribution; E3: indicates a label directly, for example, indicates that the data label is a CQI value of a channel; or E4: indicates that the data label is an RI of a channel. Specifically, the second information may include an obtaining manner identifier (for example, E1/E2/E3/E4).

The first node sends the second information to the second node, so that the second node processes the raw data based on the second information, to obtain the first information.

In a possible implementation, the method may further include step 604: The first node further sends third information to the second node, where the third information indicates a reporting configuration of the first information. For example, the reporting configuration includes at least one of the following: a type of the first information, and a respective quantity or a total quantity of the first information of one or more types. In other words, the first node sends the third information to the second node, so that the second node performs reporting based on the type of the first information and/or the quantity of the first information indicated in the third information. For example, multiple types of the first information are predefined. Further, when the third information indicates that the first information is a type identifier, the second node may determine an information type included in the first information. For example, if the third information indicates, based on the type identifier of the first information predefined above, that the type of the first information is A, it can be learned that the first information includes the raw data and the feature information of the raw data. Alternatively, a type identifier of information included in the first information is predefined, where it is specified that a type identifier of the raw data is A_1, a type identifier of the feature information of the raw data is A_2, a type identifier of the label is A_3, and a type identifier of the priority is A_4. In this case, the third information indicates the type identifier of the information included in the first information. For example, if the third information indicates that the type of the first information is {A_1, A_2, A_3}, the second node may determine that the first information includes the raw data, the feature information of the raw data, and the label of the raw data. For another example, when the third information further indicates that a data quantity of the first information is 1000, it indicates that a data quantity of the raw data and a data quantity of the feature information of the raw data to be reported by the second node are 1000 respectively, or indicates that a sum of a data quantity of the raw data and a data quantity of the feature information of the raw data is 1000. For example, the data quantity of the raw data reported by the second node is 500, and the data quantity of the feature information of the raw data is 500. Alternatively, the data quantity of the feature information of the raw data is greater than or less than the data quantity of the raw data. For example, a ratio of the two is 6:4, where the ratio may be predefined or configured. This is not limited in this solution. For another example, multiple values of the quantity may be predefined, and the third information indicates a predefined identifier of the value of the quantity, so that the second node determines a respective quantity or a total quantity of the first information of one or more types.

Optionally, the reporting configuration may further include one or more of time domain resource information or frequency domain resource information of the first information. This is not limited in this solution.

The first node sends the third information to the second node, so that the second node performs reporting based on the reporting configuration of the first information indicated in the third information. In this way, a data provisioning end and a data synthesis end that are separated from each other can align understanding of data, improving quality of synthetic data.

In a possible implementation, at least two of the first information, the second information, and the third information may be different content included in a same piece of information sent by the first node, or the first information, the second information, and the third information are content in different messages sent by the first node. This is not limited in this solution.

It may be understood that content that is not indicated in the first information, the second information, and the third information, for example, the time domain resource information or the frequency domain resource information for reporting, may be predefined in a protocol, or may be preset or stored in the first node and the second node, for example, as a default configuration, or may be determined based on other information.

Based on the indication of the second information and/or the third information, the second node processes the raw data, to send the first information to the first node. For example, if the third information indicates that the type of the first information is A, that is, the first information includes the raw data and the feature information of the raw data, and the second information indicates that the obtaining manner of the feature information of the raw data is extracting N eigenvectors of the raw data, the second node determines the raw data and the feature information of the raw data, and performs reporting based on the indication of the third information. Optionally, if the third information indicates that the first information is to include the feature information of the raw data, but the second node does not receive an indication of the obtaining manner the feature information, a predefined obtaining manner of the feature information may be used. Similarly, if the third information indicates that the first information is to include the data label of the raw data, but the second node does not receive an indication of the obtaining manner of the data label of the raw data, a predefined obtaining manner may be used.

In a possible implementation, the method may further include step 605: The first node further sends fourth information to the second node, where the fourth information indicates that the first node has a capability of performing joint processing on feature information of multiple raw data items of a same group. The joint processing may be, for example, weighted summation of feature information of multiple raw data items of a same group.

The first node sends the fourth information to the second node, so that the second node may classify raw data that can be jointly processed into a same group, and does not classify raw data that cannot be jointly processed into a same group, so that raw data of different groups are not fused and synthetic data that does not meet expectations is not generated.

Optionally, the first information further includes the following type of information: group information of the raw data. The second node reports the group information of the raw data to the first node, so that the first node may perform joint processing on feature information of multiple raw data items of a same group.

It may be understood that, in this example, raw data that can be jointly processed is classified into a same group. The group of information may be different from the data label of the raw data above. For example, a classification criterion for grouping the raw data may be different from a classification criterion of the data label of the raw data. Definitely, classification criteria of the two may alternatively be the same, that is, the group information is the data label. This is not limited in this solution.

It may be understood that step 603, step 604, and step 605 in FIG. 6 are one or more optional steps. The steps shown in FIG. 6 are merely examples, and an order of execution and time of execution of the steps are not limited.

602: The first node generates multiple synthetic data items based on the first information, where the multiple synthetic data items are used as an input of a model.

The first node generates the multiple synthetic data items based on the raw data and the feature information of the raw data. For example, the first node inputs the raw data and the feature information of the raw data into the generation model, to generate the multiple synthetic data items. Alternatively, the first node preprocesses the first information, and then inputs processed information into the generation model, to generate the multiple synthetic data items. The preprocessing may be, for example, normalizing the first information, or concatenating the raw data and the feature information of the raw data in the first information.

In a conventional data generation manner, raw field measured data is used as a condition for synthesizing data, and a generation model simulates the raw data in terms of data dimension, precision, content, or the like, so that the synthetic data is highly similar to the field measured data. However, using the raw data alone as the input easily leads to insufficient diversity of the synthetic data. However, in the solution of this application, the feature information of the raw data, or the feature information and the data label of the raw data are used as a condition for synthesizing data, and the generation model simulates the raw data in some specific feature dimensions, improving diversity of the synthetic data. Therefore, further, based on joint representation by the raw data and the feature information of the raw data, or joint representation by the raw data, the feature information of the raw data, and the data label of the raw data, data is generated by using a small quantity of data, so that requirements for highly diversified synthetic data and similar feature distribution between the synthetic data and the raw data can be met.

For example, channel generation is used as an example. The raw data is channel information, and the feature information of the raw data may include a channel angle power spectrum feature, a channel delay spectrum feature, and the like. In this case, the generation model may learn that a generated channel should be close to the original channel information in terms of angle and delay power spectrum distribution, while another eigenvalue, for example, a Doppler frequency shift, may be random.

For another example, weighted summation is performed on feature information of multiple raw data items of a same manner, improving diversity of synthetic data. For example, channel generation is used as an example. The raw data is channel information, and the feature information of the raw data may include a channel angle power spectrum feature, a channel delay spectrum feature, and the like. Feature information of channel information with different angle power spectrum distribution undergoes weighted summation, and is input into the generation model, so that a channel with more diversified angle power spectrum distribution can be synthesized, further improving diversity of the synthetic data and improving accuracy of the synthetic data.

The multiple synthetic data items may be used as an input of a model, and the input may be used for model processing, for example, model training, model update, model inference, or model performance monitoring.

Processing such as model training and update may be performed at the first node, or the synthetic data may be transmitted to a model processing node for processing such as model training and update. After model training or update is complete, model inference may be performed, or the model may be transferred to a model utilization node for model inference. For example, the data is transmitted to the second node for model inference.

In a possible implementation, the first node further sends at least one subset of the multiple synthetic data items to the second node.

For the at least one subset of the multiple synthetic data items, in an example, multiple samples may be randomly selected from the multiple synthetic data items as a subset of the synthetic data. In another example, multiple samples are randomly selected from synthetic data obtained based on at least one of multiple types of data labels, to obtain the at least one subset of the synthetic data. In a possible implementation, the data label of the raw data has three possible values (for example, a data label a, a data label b, and a data label c), one subset of the synthetic data is a subset obtained by randomly selecting multiple samples in synthetic data obtained by using the data label a as a condition for input, and another subset of the synthetic data is a subset obtained by randomly selecting multiple samples in synthetic data obtained by using the data label b (or the data label c) as a condition for input. Alternatively, for one subset of the synthetic data, multiple samples S1 are obtained through random sampling in synthetic data obtained by using the data label a as a condition for input, multiple samples S2 are obtained through random sampling in synthetic data obtained by using the data label b as a condition for input, multiple samples S3 are obtained through random sampling in synthetic data obtained by using the data label c as a condition for input, and one subset is obtained based on the multiple samples S1, the multiple samples S2, and the multiple samples S3. Sampling is repeated in this manner, to obtain another subset. Definitely, the subset may be obtained in another manner. This is not limited in this solution.

The second node sends fifth information to the first node based on the received at least one subset. The fifth information indicates an evaluation result of at least one piece of synthetic data in the at least one subset. The evaluation result indicates at least one piece of synthetic data that needs to be removed from the at least one subset, or indicates at least one piece of synthetic data that does not need to be removed from the at least one subset. Correspondingly, the first node receives the fifth information.

The synthetic data that needs to be removed may be, for example, synthetic data having feature distribution different from that of the raw data of the second node. In a possible implementation, the second node obtains the evaluation result by determining whether the received synthetic data is similar to the field measured data. For example, the second node calculates a distance between one piece of synthetic data in the at least one subset and local data of the second node. If one piece of local data exists, where a distance between the synthetic data and the local data meets a first condition, it is determined that the synthetic data and the raw data have same feature distribution, that is, the synthetic data is not removed. If a distance between the synthetic data and each piece of local data does not meet the first condition, it is determined that the synthetic data and the raw data have different feature distribution, that the synthetic data needs to be removed. The first condition may be a specific range, a threshold, or the like. Optionally, calculating the distance between the synthetic data and the local data may be using a norm of a difference between the synthetic data and the local data as the distance between the synthetic data and the local data. Alternatively, data feature information of the synthetic data and data feature information of the local data are separately extracted, and a norm of a difference between the data feature information of the synthetic data and the data feature information of the local data is used as the distance between the synthetic data and the local data.

Optionally, 0 or 1 may be used in the fifth information to indicate whether each piece of synthetic data is to be removed. Alternatively, the second node uses a synthetic data identifier list to indicate synthetic data to be removed from a synthetic data subset, or uses a synthetic data identifier list to indicate synthetic data not to be removed from a synthetic data subset. Each piece of synthetic data in the synthetic data subset has a unique identifier.

The second node may further obtain the foregoing evaluation result in another manner. This is not limited in this solution.

The first node screens the multiple synthetic data items based on the received evaluation result, to obtain at least one piece of synthetic data obtained through screening.

Optionally, the at least one piece of synthetic data obtained through screening is determined based on a distance between first synthetic data to be removed and another piece of synthetic data in the multiple synthetic data items. The first synthetic data to be removed is synthetic data that needs to be removed as determined based on the fifth information.

For example, the first node calculates a distance between synthetic data that needs to be removed and another piece of synthetic data in the first node. If one piece of synthetic data exists, where a distance between the synthetic data and the synthetic data to be removed is not greater than a threshold, it is determined that the synthetic data is also to be removed.

The synthetic data is screened through an evaluation process of the synthetic data, effectively improving quality of the synthetic data.

The at least one piece of synthetic data obtained through screening is used as an input of the model. For descriptions of this part, refer to the descriptions of step 601. Details are not described herein again.

Optionally, the first node is a third-party device that performs an action related to the first node as described above. For example, the foregoing steps 601 and 602 are both performed by the third-party device.

Optionally, the second node is a third-party device that performs an action related to the second node as described above. For example, the foregoing step 601 is performed by the third-party device.

Optionally, the first node is a network device. For example, the foregoing steps 601 and 602 are both performed by the network device.

Optionally, the second node is a terminal device. For example, the foregoing step 601 is performed by the terminal device.

Optionally, the first node includes a network device and a third-party device. In an example, the foregoing step 602 may be performed by the third-party device such as an OTT or a cloud server, and the foregoing step 601 may be performed by the network device. In addition, the network device may also communicate with the third-party device to transmit the content transmitted in the foregoing step 601.

In this embodiment of this application, the first node receives the raw data and the feature information of the raw data from the second node, and then generates multiple synthetic data items based on the raw data and the feature information of the raw data, where the multiple synthetic data items are used for model processing. In this example, synthetic data that meets a diversity requirement and that has same data distribution as that of field measured data may be generated based on the raw data and the feature information of the raw data, improving quality of the synthetic data, and further helping improve performance of model training or update.

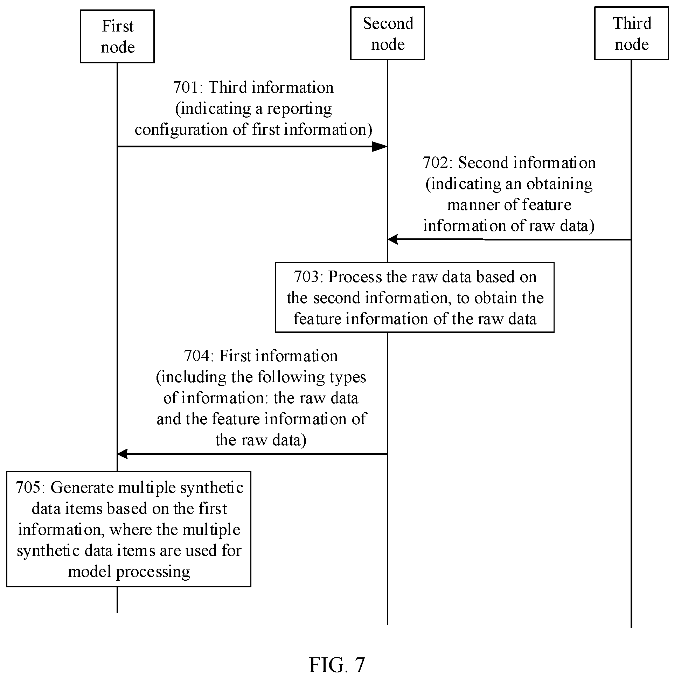

The foregoing example is described by using an example in which the first node sends the second information to the second node, and the second information indicates the obtaining manner of the feature information of the raw data. Alternatively, the second information may be sent by a third node to the second node (in the embodiment shown in FIG. 7). In other words, the third node indicates the obtaining manner of the feature information of the raw data to the second node, so that the second node performs processing based on the obtaining manner of the feature information of the raw data, to obtain the feature information of the raw data. The third node may be a model training node or a model utilization node, or may be referred to as a third entity, for example, a model training entity or a model utilization entity.

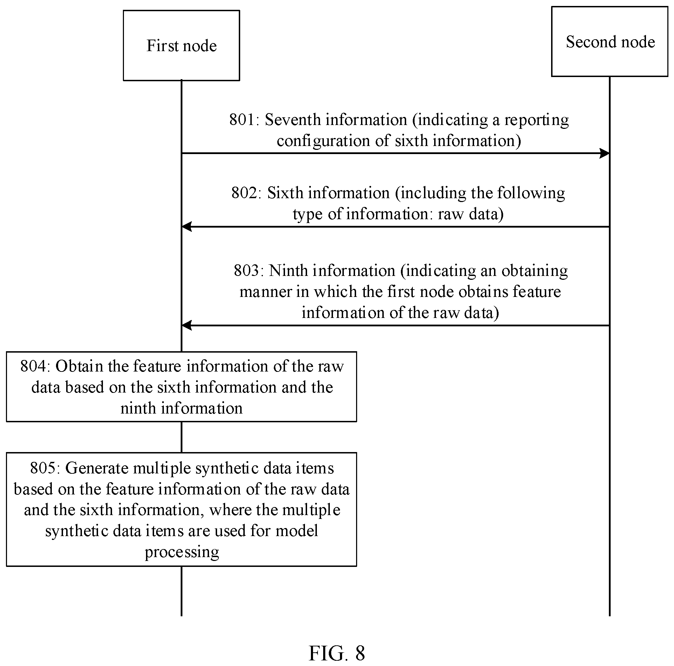

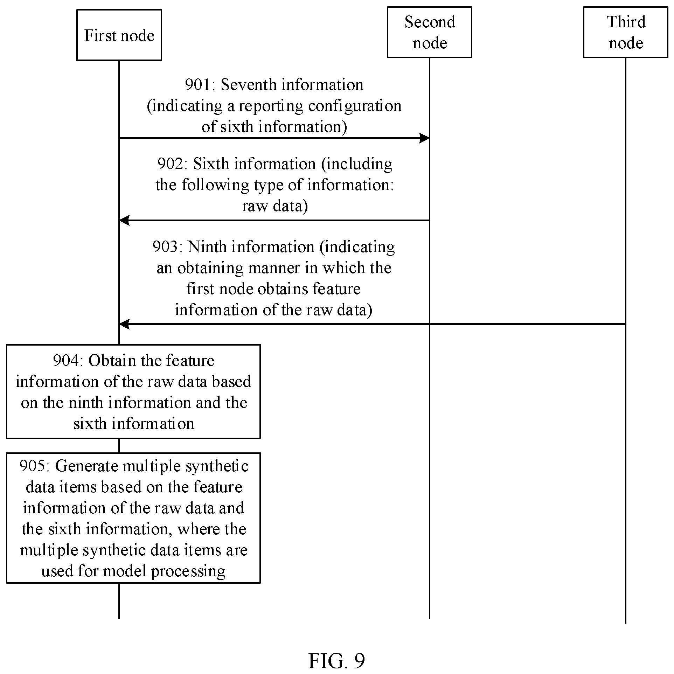

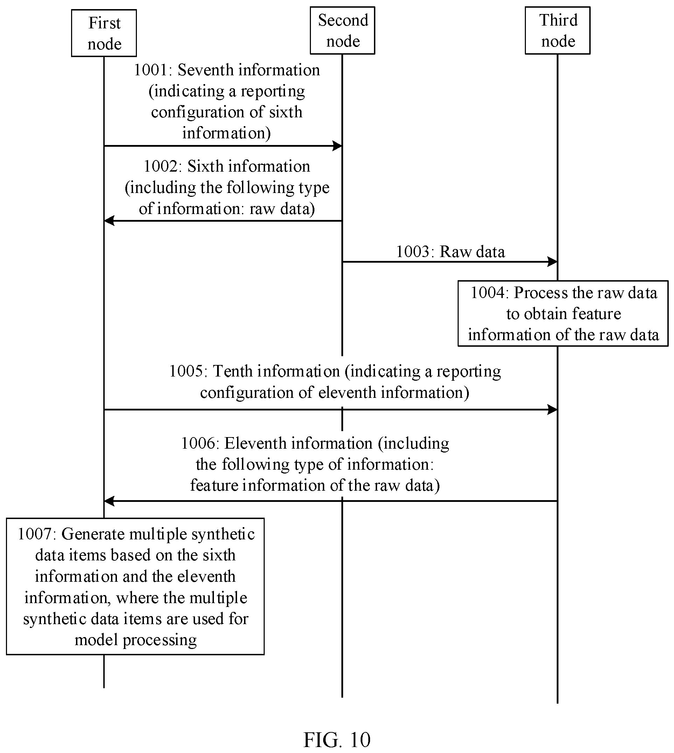

The foregoing descriptions are provided by using an example in which the second node processes the raw data to obtain the feature information of the raw data. Alternatively, the first node may process the raw data to obtain the feature information of the raw data (in the embodiment shown in FIG. 8 and the embodiment shown in FIG. 9), or the third node processes the raw data to obtain the feature information of the raw data (in the embodiment shown in FIG. 10).

The following separately describes the foregoing alternative solutions in detail based on FIG. 7, FIG. 8, FIG. 9, and FIG. 10.

FIG. 7 is a schematic flowchart of another model data obtaining method according to an embodiment of this application. The example shown in FIG. 7 is illustrated by using an example in which a first node (a data synthesis node, or may be referred to as a central node, a first entity, or the like), a second node (a data provisioning node, or may be referred to as a to-be-served node, a second entity, or the like), and a third node (a model training node or a model utilization node, or may be referred to as a third entity, for example, a model training entity or a model utilization entity) are execution bodies of the interaction. A difference between this example and the example shown in FIG. 6 lies in that the second information is sent by the third node to the second node, but not sent by the first node to the second node. The model data obtaining method shown in FIG. 7 may include steps 701 to 705. Steps 701 to 705 are specifically as follows.

701: A first node sends third information to a second node, where the third information indicates a reporting configuration of first information. Correspondingly, the second node receives the third information.

For descriptions of this part, refer to the descriptions of step 601 in the embodiment shown in FIG. 6. Details are not described herein again.

702: A third node sends second information to the second node, where the second information indicates an obtaining manner of feature information of raw data. Correspondingly, the second node receives the second information.

The third node determines a feature extraction manner of the raw data based on a model requirement, and then sends the obtaining manner of the feature information of the raw data to the second node.

703: The second node processes the raw data based on the second information, to obtain the feature information of the raw data.

For descriptions of this part, refer to the descriptions of step 601 in the embodiment shown in FIG. 6. Details are not described herein again.

Optionally, in a first possible implementation, the third node further sends an obtaining manner of a data label of the raw data to the second node. For example, the second information further indicates the obtaining manner of the data label of the raw data.

In a second possible implementation, the first node sends second information to the second node, where the second information indicates a processing manner in which the second node obtains the first information, and the processing manner in which the second node obtains the first information includes an obtaining manner of a data label of the raw data.

704: The second node sends the first information to the first node, where the first information includes the following types of information: the raw data and the feature information of the raw data. Correspondingly, the first node receives the first information.

Optionally, the first information further includes the following type of information: the data label of the raw data.

For descriptions of this part, refer to the descriptions of step 601 in the embodiment shown in FIG. 6. Details are not described herein again.

705: The first node generates multiple synthetic data items based on the first information, where the multiple synthetic data items are used for model processing.

For descriptions of this part, refer to the descriptions of step 602 in the embodiment shown in FIG. 6. Details are not described herein again.

Optionally, the first node is a third-party device that performs an action related to the first node as described above. For example, the foregoing steps 701, 704, and 705 are all performed by the third-party device.

Optionally, the second node is a third-party device that performs an action related to the second node as described above. For example, the foregoing steps 701, 702, 703, and 704 are performed by the third-party device.

Optionally, the third node is a third-party device that performs an action related to the third node as described above. For example, the foregoing step 702 is performed by the third-party device.

Optionally, the first node is a network device. For example, the foregoing steps 701, 704, and 705 are all performed by the network device.

Optionally, the second node is a terminal device. For example, the foregoing steps 701, 702, 703, and 704 are performed by the terminal device.

Optionally, the third node is an AI node. For example, the foregoing step 702 is performed by the AI node.

Optionally, the first node includes a network device and a third-party device. In an example, the foregoing step 705 may be performed by the third-party device such as an OTT or a cloud server, and the foregoing steps 701 and 703 may be performed by the network device. In addition, the network device may also communicate with the third-party device to transmit the content transmitted in the foregoing steps 701 and 703.

Optionally, the second node includes a terminal device and a third-party device. In an example, the foregoing step 703 may be performed by the third-party device such as an OTT or a cloud server, and the foregoing steps 701, 702, and 704 may be performed by the terminal device. In addition, the terminal device may also communicate with the third-party device to transmit the content transmitted in the foregoing steps 701, 702, and 704.

Optionally, the third node is an AI entity. In an example, the foregoing step 702 may be performed by a third-party device such as an OTT or a cloud server.

In this embodiment of this application, the second node processes the raw data based on the obtaining manner of the feature information of the raw data from the third node, to obtain the feature information of the raw data. Further, the second node sends the raw data and the feature information of the raw data to the first node. The first node generates the multiple synthetic data items based on the raw data and the feature information of the raw data from the second node. In this example, the model training node or the model utilization node (the third node) determines, based on a model requirement, the obtaining manner of the feature information of the raw data (or the obtaining manner of the data label of the raw data), improving quality of the synthetic data, and further helping improve performance of model training or update.

FIG. 8 is a schematic flowchart of another model data obtaining method according to an embodiment of this application. The example shown in FIG. 8 is illustrated by using an example in which a first node (a data synthesis node, or may be referred to as a central node, a first entity, or the like) and a second node (a data provisioning node, or may be referred to as a to-be-served node, a second entity, or the like) are execution bodies of the interaction. The model data obtaining method shown in FIG. 8 may include steps 801 to 805. Steps 801 to 805 are specifically as follows.

801: A first node sends seventh information to a second node, where the seventh information indicates a reporting configuration of sixth information. Correspondingly, the second node receives the seventh information.

For example, the seventh information indicates that the sixth information is to include raw data; or the seventh information indicates that the sixth information is to include raw data and a data label of the raw data; or the seventh information indicates that the sixth information is to include raw data, a data label of the raw data, a priority of the raw data, and the like.

Optionally, when the seventh information indicates that the sixth information is to include the data label of the raw data, the first node further sends eighth information to the second node, where the eighth information indicates a processing manner in which the second node obtains the sixth information, and the processing manner in which the second node obtains the sixth information includes an obtaining manner of the data label of the raw data.

Definitely, the obtaining manner of the data label of the raw data may alternatively be determined by the second node based on a model processing requirement. This is not limited in this solution.

Further, the second node obtains the data label of the raw data based on the obtaining manner of the data label of the raw data and the raw data.

The second node further reports the data label of the raw data to the first node.

For descriptions of this part, refer to the descriptions of step 601 in the embodiment shown in FIG. 6. Details are not described herein again.

802: The second node sends the sixth information to the first node, where the sixth information includes the following type of information: the raw data. Correspondingly, the first node receives the sixth information.

803: The second node further sends ninth information to the first node, where the ninth information indicates an obtaining manner in which the first node obtains feature information of the raw data. Correspondingly, the first node receives the ninth information.

In other words, the obtaining manner of the feature information of the raw data in this example is determined by the second node. The second node may determine the obtaining manner of the feature information of the raw data based on a model requirement.

804: The first node obtains the feature information of the raw data based on the sixth information and the ninth information.

The first node may obtain the feature information of the raw data based on the received raw data and the obtaining manner of the feature information of the raw data.

805: The first node generates multiple synthetic data items based on the feature information of the raw data and the sixth information, where the multiple synthetic data items are used for model processing.

For descriptions of this step, refer to the descriptions of step 602 in the embodiment shown in FIG. 6. Details are not described herein again.

Optionally, the first node is a third-party device that performs an action related to the first node as described above. For example, the foregoing steps 801 to 805 are all performed by the third-party device.

Optionally, the second node is a third-party device that performs an action related to the second node as described above. For example, the foregoing steps 801 to 803 are performed by the third-party device.

Optionally, the first node is a network device. For example, the foregoing steps 801 to 805 are all performed by the network device.

Optionally, the second node is a terminal device. For example, the foregoing steps 801 to 803 are performed by the terminal device.

Optionally, the first node includes a network device and a third-party device. In an example, the foregoing steps 804 and 805 may be performed by the third-party device such as an OTT or a cloud server, and the foregoing steps 801 to 803 may be performed by the network device. In addition, the network device may also communicate with the third-party device to transmit the content transmitted in the foregoing steps 801 to 803.

In this embodiment of this application, the first node performs processing based on the raw data and the obtaining manner of the feature information of the raw data from the second node, to obtain the feature information of the raw data. Then, the first node generates the multiple synthetic data items based on the feature information of the raw data and the raw data. The second node determines, based on the model requirement, the obtaining manner of the feature information of the raw data, improving quality of the synthetic data, and further helping improve performance of model training or update.

For another example, the following provides descriptions by using an example in which the third node indicates the obtaining manner of the feature information of the raw data to the first node. FIG. 9 is a schematic flowchart of still another model data obtaining method according to an embodiment of this application. The example shown in FIG. 9 is illustrated by using an example in which a first node (a data synthesis node, or may be referred to as a central node, a first entity, or the like), a second node (a data provisioning node, or may be referred to as a to-be-served node, a second entity, or the like), and a third node (a model training node or a model utilization node, or may be referred to as a third entity, for example, a model training entity or a model utilization entity) are execution bodies of the interaction. The model data obtaining method shown in FIG. 9 may include steps 901 to 905. Steps 901 to 905 are specifically as follows.

901: A first node sends seventh information to a second node, where the seventh information indicates a reporting configuration of sixth information. Correspondingly, the second node receives the seventh information.

For example, the seventh information indicates that the sixth information is to include raw data; or the seventh information indicates that the sixth information is to include raw data and a data label of the raw data; or the seventh information indicates that the sixth information is to include raw data, a data label of the raw data, a priority of the raw data, and the like.

Optionally, when the seventh information indicates that the sixth information is to include the data label of the raw data, the first node further sends eighth information to the second node, where the eighth information indicates a processing manner in which the second node obtains the sixth information, and the processing manner in which the second node obtains the sixth information includes an obtaining manner of the data label of the raw data.

Definitely, the obtaining manner of the data label of the raw data may alternatively be determined by the second node based on a model processing requirement. This is not limited in this solution.

Further, the second node obtains the data label of the raw data based on the obtaining manner of the data label of the raw data and the raw data.

For descriptions of this part, refer to the descriptions of step 601 in the embodiment shown in FIG. 6. Details are not described herein again.

902: The second node sends the sixth information to the first node, where the sixth information includes the following type of information: the raw data. Correspondingly, the first node receives the sixth information.

903: The third node sends ninth information to the first node, where the ninth information indicates an obtaining manner in which the first node obtains feature information of the raw data. Correspondingly, the first node receives the ninth information.

The third node may be a model training node or a model utilization node. The model training node or the model utilization node determines a feature extraction manner of the raw data based on a model requirement, and then sends the feature extraction manner of the raw data to the first node.

In a possible implementation, when the seventh information indicates that the sixth information is to include the data label of the raw data, the third node further sends the obtaining manner of the data label of the raw data to the second node. In other words, the obtaining manner of the data label of the raw data may be indicated by the third node to the second node.

In a possible implementation, the third node further sends the obtaining manner of the data label of the raw data to the first node. In other words, the obtaining manner of the data label of the raw data may be indicated by the third node to the first node.

904: The first node obtains the feature information of the raw data based on the ninth information and the sixth information.

905: The first node generates multiple synthetic data items based on the feature information of the raw data and the sixth information, where the multiple synthetic data items are used for model processing.

For descriptions of this part, refer to the descriptions of step 602 in the embodiment shown in FIG. 6. Details are not described herein again.

Optionally, the first node is a third-party device that performs an action related to the first node as described above. For example, the foregoing steps 901 to 905 are all performed by the third-party device.

Optionally, the second node is a third-party device that performs an action related to the second node as described above. For example, the foregoing steps 901 and 902 are performed by the third-party device.

Optionally, the third node is a third-party device that performs an action related to the third node as described above. For example, the foregoing step 903 is performed by the third-party device.

Optionally, the first node is a network device. For example, the foregoing steps 901 to 905 are all performed by the network device.

Optionally, the second node is a terminal device. For example, the foregoing steps 901 and 902 are performed by the terminal device.

Optionally, the third node is an AI node. For example, the foregoing step 903 is performed by the AI node.

Optionally, the first node includes a network device and a third-party device. In an example, the foregoing steps 904 and 905 may be performed by the third-party device such as an OTT or a cloud server, and the foregoing steps 901 to 903 may be performed by the network device. In addition, the network device may also communicate with the third-party device to transmit the content transmitted in the foregoing steps 901 and 903.

Optionally, the third node is an AI entity. In an example, the foregoing step 903 may be performed by a third-party device such as an OTT or a cloud server.

In this embodiment of this application, the first node obtains the feature information of the raw data based on the raw data from the second node and the obtaining manner of the feature information of the raw data from the third node. Then, the first node generates the multiple synthetic data items based on the feature information of the raw data and the raw data. In this example, synthetic data that meets a diversity requirement and that has same data distribution as that of field measured data may be generated based on the raw data and the feature information of the raw data, improving quality of the synthetic data, and further helping improve performance of model training or update.

The following descriptions are provided by using an example in which the third node processes the raw data to obtain the feature information of the raw data. FIG. 10 is a schematic flowchart of still another model data obtaining method according to an embodiment of this application. Optionally, the method may be applied to the foregoing model data obtaining system, for example, the model data obtaining system shown in FIG. 1. The example shown in FIG. 10 is illustrated by using an example in which a first node (a data synthesis node, or may be referred to as a central node, a first entity, or the like), a second node (a data provisioning node, or may be referred to as a to-be-served node, a second entity, or the like), and a third node (a model training node or a model utilization node, or may be referred to as a third entity, for example, a model training entity or a model utilization entity) are execution bodies of the interaction. The model data obtaining method shown in FIG. 10 may include steps 1001 to 1007. Steps 1001 to 1007 are specifically as follows.

1001: A first node sends seventh information to a second node, where the seventh information indicates a reporting configuration of sixth information. Correspondingly, the second node receives the seventh information.

For example, the seventh information indicates that the sixth information is to include raw data; or the seventh information indicates that the sixth information is to include raw data and a data label of the raw data; or the seventh information indicates that the sixth information is to include raw data, a data label of the raw data, a priority of the raw data, and the like.

For descriptions of this part, refer to the descriptions of step 601 in the embodiment shown in FIG. 6. Details are not described herein again.

1002: The second node sends the sixth information to the first node, where the sixth information includes the following type of information: the raw data. Correspondingly, the first node receives the sixth information.

1003: The second node sends the raw data to a third node. Correspondingly, the third node receives the raw data.

In addition to sending the raw data to the first node, the second node also sends the raw data to the third node.

The third node may be a model training node or a model utilization node.

1004: The third node processes the raw data to obtain feature information of the raw data.

The third node (the model training node or the model utilization node) determines an obtaining manner of the feature information of the raw data based on a model requirement, and then processes the received raw data based on the obtaining manner of the feature information of the raw data, to obtain the feature information of the raw data.

1005: The first node sends tenth information to the third node, where the tenth information indicates a reporting configuration of eleventh information. Correspondingly, the third node receives the tenth information.

The eleventh information includes the following type of information: the feature information of the raw data. The reporting configuration may include, for example, the feature information of the raw data, a data quantity of the feature information of the raw data, and the like.

In a possible implementation, the tenth information further indicates a reporting configuration of a data label of the raw data.

In other words, the data label of the raw data may be reported by the third node, or may be reported by the second node. This is not limited in this solution.

1006: The third node sends the eleventh information to the first node, where the eleventh information includes the following type of information: the feature information of the raw data. Correspondingly, the first node receives the eleventh information.

That is, the third node reports the feature information of the raw data to the first node.

1007: The first node generates multiple synthetic data items based on the sixth information and the eleventh information, where the multiple synthetic data items are used for model processing.

For descriptions of this step, refer to the descriptions of step 602 in the embodiment shown in FIG. 6. Details are not described herein again.

For example, when the eleventh information includes the data label of the raw data, in a possible implementation, the first node further sends eighth information to the second node, where the eighth information indicates a processing manner in which the second node obtains the sixth information, and the processing manner in which the second node obtains the sixth information includes an obtaining manner of the data label of the raw data.

Alternatively, the third node sends eighth information to the second node, where the eighth information indicates a processing manner in which the second node obtains the sixth information, and the processing manner in which the second node obtains the sixth information includes an obtaining manner of the data label of the raw data. This is not limited in this solution.

This example is described by using an example in which the second node reports the data label of the raw data.

Alternatively, the data label of the raw data may be reported by the third node. For example, when the eleventh information includes the data label of the raw data, the third node determines the obtaining manner of the data label of the raw data based on a model requirement. The third node processes the raw data based on the obtaining manner of the data label of the raw data, to obtain the data label of the raw data. Further, the third node sends the data label of the raw data to the first node.

Optionally, the first node is a third-party device that performs an action related to the first node as described above. For example, the foregoing steps 1001, 1002, and 1005 to 1007 are all performed by the third-party device.

Optionally, the second node is a third-party device that performs an action related to the second node as described above. For example, the foregoing steps 1001 to 1003 are performed by the third-party device.

Optionally, the third node is a third-party device that performs an action related to the third node as described above. For example, the foregoing steps 1003 to 1006 are performed by the third-party device.

Optionally, the first node is a network device. For example, the foregoing steps 1001, 1002, and 1005 to 1007 are all performed by the network device.

Optionally, the second node is a terminal device. For example, the foregoing steps 1001 to 1003 are performed by the terminal device.

Optionally, the third node is an AI node. For example, the foregoing steps 1003 to 1006 is performed by the AI node.

Optionally, the first node includes a network device and a third-party device. In an example, the foregoing step 1007 may be performed by the third-party device such as an OTT or a cloud server, and the foregoing steps 1001, 1002, 1005, and 1006 may be performed by the network device. In addition, the network device may also communicate with the third-party device to transmit the content transmitted in the foregoing steps 1001, 1002, 1005, and 1006.

Optionally, the third node includes a third-party device, and a network device or a terminal device. In an example, the foregoing step 1004 may be performed by the third-party device such as an OTT or a cloud server, and the foregoing steps 1003, 1005, and 1006 may be performed by the network device or the terminal device. In addition, the network device or the terminal device may also communicate with the third-party device to transmit the content transmitted in the foregoing steps 1003, 1005, and 1006.

In this embodiment of this application, the first node generates the multiple synthetic data items based on the raw data from the second node and the feature information of the raw data from the third node. In this example, synthetic data that meets a diversity requirement and that has same data distribution as that of field measured data may be generated based on the raw data and the feature information of the raw data, improving quality of the synthetic data, and further helping improve performance of model training or update.

It should be noted that, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

It should be noted that the second node and the third node in this embodiment of this application may be located in a same node, or may be two different nodes. This is not limited in this solution.

The methods in embodiments of this application are described in detail above. Apparatuses in embodiments of this application are provided below. It may be understood that, in apparatus embodiments of this application, division into multiple units or modules is merely logical division based on functions, and is not intended to limit a specific structure of the apparatus. During specific implementation, some functional modules may be subdivided into more functional modules that are smaller, and some functional modules may alternatively be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, a model data obtaining apparatus is provided, including modules (or means) configured to implement steps performed by the first node in any one of the foregoing methods. For another example, a model data obtaining apparatus is provided, including modules (or means) configured to implement steps performed by the second node in any one of the foregoing methods. For another example, a model data obtaining apparatus is provided, including modules (or means) configured to implement steps performed by the third node in any one of the foregoing methods.

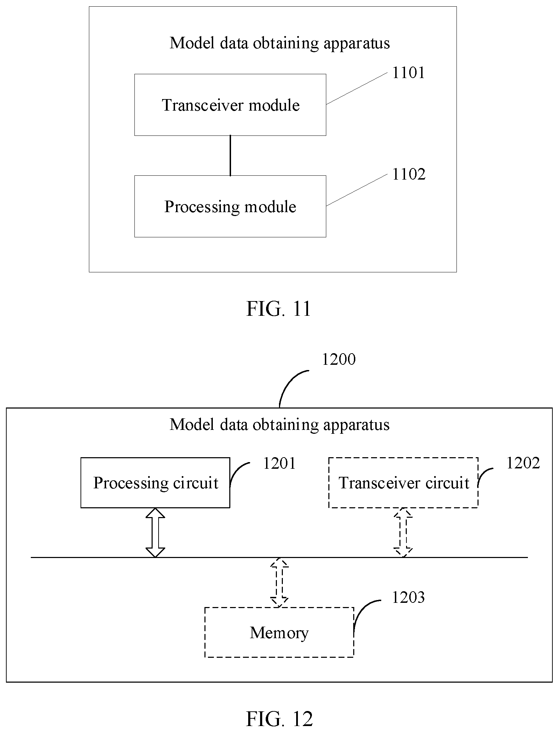

For example, FIG. 11 is a diagram of a structure of a model data obtaining apparatus according to an embodiment of this application. As shown in FIG. 11, the apparatus may include a transceiver module 1101 and a processing module 1102.

When the model data obtaining apparatus is configured to implement a function of the first node in the foregoing method embodiments, the transceiver module 1101 is configured to perform the operation of the first node in step 601 in the embodiment shown in FIG. 6, and the processing module 1102 is configured to perform step 602 in the embodiment shown in FIG. 6; or the transceiver module 1101 is configured to perform one or more of the operations of the first node in steps 701 and 704 in the embodiment shown in FIG. 7, and the processing module 1102 is configured to perform step 705 in the embodiment shown in FIG. 7; or the transceiver module 1101 is configured to perform one or more of the operations of the first node in steps 801, 802, and 803 in the embodiment shown in FIG. 8, and the processing module 1102 is configured to perform one or more of steps 804 and 805 in the embodiment shown in FIG. 8; or the transceiver module 1101 is configured to perform one or more of the operations of the first node in steps 901, 902, and 903 in the embodiment shown in FIG. 9, and the processing module 1102 is configured to perform one or more of steps 904 and 905 in the embodiment shown in FIG. 9; or the transceiver module 1101 is configured to perform one or more of the operations of the first node in steps 1001, 1002, 1005, and 1006 in the embodiment shown in FIG. 10, and the processing module 1102 is configured to perform step 1007 in the embodiment shown in FIG. 10.

When the model data obtaining apparatus is configured to implement a function of the second node in the foregoing method embodiments, the transceiver module 1101 is configured to perform the operation of the second node in step 601 in the embodiment shown in FIG. 6; or the transceiver module 1101 is configured to perform one or more of the operations of the second node in steps 701, 702, and 704 in the embodiment shown in FIG. 7, and the processing module 1102 is configured to perform step 703 in the embodiment shown in FIG. 7; or the transceiver module 1101 is configured to perform one or more of the operations of the second node in steps 801, 802, and 803 in the embodiment shown in FIG. 8; or the transceiver module 1101 is configured to perform one or more of the operations of the second node in steps 901 and 902 in the embodiment shown in FIG. 9; or the transceiver module 1101 is configured to perform one or more of the operations of the second node in steps 1001, 1002, and 1003 in the embodiment shown in FIG. 10.

When the model data obtaining apparatus is configured to implement a function of the third node in the foregoing method embodiments, the transceiver module 1101 is configured to perform the operation of the third node in step 702 in the embodiment shown in FIG. 7; or the transceiver module 1101 is configured to perform the operation of the third node in step 903 in the embodiment shown in FIG. 9; or the transceiver module 1101 is configured to perform one or more of the operations of the third node in steps 1003, 1005, and 1006 in the embodiment shown in FIG. 10, and the processing module 1102 is configured to perform step 1004 in the embodiment shown in FIG. 10.

For specific descriptions of operations involved in the foregoing modules, reference may be made to the descriptions of the foregoing embodiments, and details are not described herein again.

It should be understood that division into the modules in the foregoing apparatuses is merely logical function division. During actual implementation, all or some of the modules may be integrated into one physical entity, or may be physically separated. In addition, the module in the model data obtaining apparatus may be implemented in a form of software invoked by a processor. For example, the model data obtaining apparatus includes a processing circuit, the processing circuit is connected to a memory, the memory stores instructions, and the processor invokes the instructions stored in the memory to implement any one of the foregoing methods or functions of modules in the apparatus. The processing circuit is a processor or some processing circuits in the processor. The processor is, for example, a general-purpose processor, such as a central processing unit (central processing unit, CPU) or a microprocessor, and the memory is a memory inside the apparatus or a memory outside the apparatus. Alternatively, the module in the apparatus may be implemented in a form of hardware circuit, and functions of some or all units may be implemented by designing the hardware circuit. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a configuration file is used to configure a connection relationship between logic gate circuits, to implement the functions of some or all of the foregoing units. All the modules in the apparatus may be implemented in a form of software invoked by a processor, or all the modules may be implemented in a form of hardware circuit, or some modules may be implemented in a form of software invoked by a processor, and a remaining part may be implemented in a form of hardware circuit.

FIG. 12 is a diagram of a hardware structure of another model data obtaining apparatus according to an embodiment of this application. The model data obtaining apparatus 1200 shown in FIG. 12 includes one or more processing circuits 1201 (one processing circuit is shown in the figure). The processing circuit 1201 may be one or more processors, or a circuit for processing in one or more processors.

Optionally, the model data obtaining apparatus 1200 may further include a transceiver circuit 1202 (represented by dashed lines in the figure). The processing circuit 1201 and the transceiver circuit 1202 are coupled to each other. The transceiver circuit 1202 may be a transceiver or an interface circuit. For example, when the apparatus 1200 is a network device, a terminal device, a core network device, or an AI entity, the transceiver circuit 1202 may be a transceiver or an interface circuit. When the apparatus 1200 is a chip used for a network device, a terminal device, a core network device, or an AI entity, the transceiver circuit 1202 may be an interface circuit. For example, the AI entity may be a third-party device such as an OTT or a cloud server.

Optionally, the model data obtaining apparatus 1200 may further include a memory 1203 (represented by dashed lines in the figure). The memory 1203 is configured to store instructions to be executed by the processing circuit 1201, store input data needed by the processing circuit 1201 to run the instructions, or store data generated after the processing circuit 1201 runs the instructions.

Optionally, the memory 1203 may be located in the one or more processors, may be located outside the one or more processors, or may include a storage part located in the one or more processors and a storage part located outside the one or more processors.

The memory 1203 may be a read-only memory (read-only memory, ROM), a static storage device, a dynamic storage device, or a random access memory (random access memory, RAM).

The memory 1203 may store a program. When the program stored in the memory 1203 is executed by the processing circuit 1201, the processing circuit 1201 and the transceiver circuit 1202 are configured to perform the steps of the model data obtaining method in embodiments of this application.

The processing circuit 1201 is a circuit having a signal processing capability. In an implementation, the processing circuit 1201 may be a circuit having an instruction reading and running capability, for example, one or more of the following processors: a central processing unit CPU, a microprocessor, a graphics processing unit (graphics processing unit, GPU) (which may be understood as a microprocessor), a digital signal processor (digital signal processor, DSP), or a processing circuit in the foregoing processor. In another implementation, the processing circuit 1201 may implement a specific function by using a logical relationship of a hardware circuit. The logical relationship of the hardware circuit is fixed or may be reconfigurable. For example, the processing circuit 1201 is one or more of the following processors: a hardware circuit implemented by using an ASIC or a programmable logic device PLD, for example, an FPGA or a processing circuit in the foregoing processor. In a reconfigurable hardware circuit, a process in which the processor loads a configuration document to implement hardware circuit configuration may be understood as a process in which the processor loads instructions to implement functions of some or all of the foregoing modules. In addition, the processing circuit 1201 may alternatively be a hardware circuit designed for artificial intelligence, and may be understood as an ASIC or a processing circuit in an ASIC, for example, one or more of the following processors: a neural network processing unit (neural network processing unit, NPU), a tensor processing unit (tensor processing unit, TPU), a deep learning processing unit (deep learning processing unit, DPU), or a processing circuit in the foregoing processor. The processing circuit 1201 is configured to execute a related program, to implement a function that needs to be performed by a unit in the model data obtaining apparatus in embodiments of this application, or perform the model data obtaining method in the method embodiments of this application.

It can be learned that the modules in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, a combination of at least two of these processor forms, or some processing circuits in these processors.

In addition, all or some of the modules in the foregoing apparatus may be integrated, or may be independently implemented. In an implementation, the modules are integrated and implemented in a form of system-on-a-chip (system-on-a-chip, SOC). The SOC may include at least one processor configured to implement any one of the foregoing methods or implement functions of the modules of the apparatus. Types of the at least one processor may be different, including, for example, a CPU and an FPGA, a CPU and an artificial intelligence processor, and a CPU and a GPU.

The transceiver circuit 1202 implements communication between the apparatus 1200 and another device or a communication network by using a transceiver apparatus, for example but not limited to, a transceiver. For example, information may be obtained by using the transceiver circuit 1202.

It should be noted that, although only the processing circuit, the transceiver circuit, and the memory are shown in the apparatus 1200 shown in FIG. 12, in a specific implementation process, a person skilled in the art should understand that the apparatus 1200 further includes another component necessary for appropriate running. In addition, based on a specific requirement, a person skilled in the art should understand that the apparatus 1200 may further include hardware components for implementing other additional functions. In addition, a person skilled in the art should understand that the apparatus 1200 may alternatively include only a component required for implementing embodiments of this application, and does not need to include all components shown in FIG. 12.

An embodiment of this application further provides a computer-readable storage medium. The computer-readable storage medium stores instructions. When the instructions are run on a computer or a processor, the computer or the processor is caused to perform one or more steps in any one of the foregoing methods.

An embodiment of this application further provides a computer program product including instructions. When the computer program product runs on a computer or a processor, the computer or the processor is caused to perform one or more steps in any one of the foregoing methods.

It should be understood that unless otherwise specified, "/" in descriptions of this application indicates an "or" relationship between associated objects. For example, A/B may indicate A or B, where A and B may be singular or plural. In addition, in the descriptions of this application, "multiple" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be other division in actual implementation. For example, multiple units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electric, mechanical, or other forms.

The units described as separate parts may or may not be physically separate, and parts displayed as units may or may not be physical units, in other words, may be located in one place, or may be distributed on multiple network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center that integrates one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A model data obtaining method, performed by a first node or a circuit used for a first node, wherein the method comprises:
receiving first information from a second node, wherein the first information comprises the following types of information: raw data and feature information of the raw data; and
generating multiple synthetic data items based on the first information, wherein the multiple synthetic data items are used for model processing.

2. The method according to claim 1, wherein the method further comprises:
sending second information to the second node, wherein the second information indicates a processing manner in which the second node obtains the first information, and the processing manner in which the second node obtains the first information comprises an obtaining manner of the feature information of the raw data.

3. The method according to claim 2, wherein the first information further comprises the following types of information: a data label of the raw data and/or a priority of the raw data.

4. The method according to claim 3, wherein the processing manner in which the second node obtains the first information further comprises an obtaining manner of the data label of the raw data.

5. The method according to any one of claims 1 to 4, wherein the method further comprises:
sending third information to the second node, wherein the third information indicates a reporting configuration of the first information.

6. The method according to claim 5, wherein the reporting configuration comprises at least one of the following: a type of the first information and a data quantity of the first information.

7. The method according to any one of claims 1 to 6, wherein the method further comprises:
sending fourth information to the second node, wherein the fourth information indicates that the first node has a capability of performing joint processing on feature information of multiple raw data items of a same group.

8. The method according to any one of claims 1 to 7, wherein the first information further comprises the following type of information: group information of the raw data.

9. The method according to any one of claims 1 to 8, wherein the method further comprises:
sending at least one subset of the multiple synthetic data items to the second node; and
receiving fifth information from the second node, wherein the fifth information indicates an evaluation result of at least one piece of synthetic data in the at least one subset, and the evaluation result indicates at least one piece of synthetic data that needs to be removed from the at least one subset, or indicates at least one piece of synthetic data that does not need to be removed from the at least one subset.

10. The method according to claim 9, wherein the evaluation result is used to screen the multiple synthetic data items to obtain at least one piece of synthetic data obtained through screening, wherein the at least one piece of synthetic data obtained through screening is used for the model processing.

11. The method according to claim 10, wherein the at least one piece of synthetic data obtained through screening is determined based on a distance between first synthetic data to be removed and another piece of synthetic data in the multiple synthetic data items, and the first synthetic data to be removed is synthetic data that needs to be removed as determined based on the fifth information.

12. A model data obtaining method, performed by a first node or a circuit used for a first node, wherein the method comprises:
receiving sixth information from a second node, wherein the sixth information comprises the following type of information: raw data; and
generating multiple synthetic data items based on the sixth information and feature information of the raw data, wherein the multiple synthetic data items are used for model processing.

13. The method according to claim 12, wherein the method further comprises:
receiving eleventh information from a third node, wherein the eleventh information comprises the following type of information: the feature information of the raw data.

14. The method according to claim 12, wherein the method further comprises:
receiving ninth information from the second node, wherein the ninth information indicates an obtaining manner in which the first node obtains the feature information of the raw data; and
processing the raw data based on the ninth information to obtain the feature information of the raw data.

15. The method according to claim 12, wherein the method further comprises:
receiving ninth information from a third node, wherein the ninth information indicates an obtaining manner in which the first node obtains the feature information of the raw data; and
processing the raw data based on the ninth information to obtain the feature information of the raw data.

16. The method according to claim 12, wherein the feature information of the raw data is determined based on an obtaining manner of the feature information of the raw data, and the obtaining manner of the feature information of the raw data is determined by the first node.

17. The method according to any one of claims 12 to 16, wherein the sixth information further comprises at least one of the following types of information: a priority of the raw data or a data label of the raw data.

18. The method according to any one of claims 12 to 17, wherein the method further comprises:
sending eighth information to the second node, wherein the eighth information indicates a processing manner in which the second node obtains the sixth information, and the processing manner in which the second node obtains the sixth information comprises an obtaining manner of the data label of the raw data.

19. The method according to any one of claims 12 to 18, wherein the method further comprises:
sending seventh information to the second node, wherein the seventh information indicates a reporting configuration of the sixth information.

20. The method according to any one of claims 12 to 19, wherein the reporting configuration comprises at least one of the following: a type of the sixth information or a data quantity of the sixth information.

21. The method according to any one of claims 12 to 20, wherein the method further comprises:
sending fourth information to the second node, wherein the fourth information indicates that the first node has a capability of performing joint processing on feature information of multiple raw data items of a same group.

22. The method according to any one of claims 12 to 21, wherein the sixth information further comprises the following type of information: group information of the raw data.

23. The method according to any one of claims 12 to 22, wherein the method further comprises:
sending at least one subset of the multiple synthetic data items to the second node; and
receiving fifth information from the second node, wherein the fifth information indicates an evaluation result of at least one piece of synthetic data in the at least one subset, and the evaluation result indicates at least one piece of synthetic data that needs to be removed from the at least one subset, or indicates at least one piece of synthetic data that does not need to be removed from the at least one subset.

24. The method according to claim 23, wherein the evaluation result is used to screen the multiple synthetic data items to obtain at least one piece of synthetic data obtained through screening, wherein the at least one piece of synthetic data obtained through screening is used for the model processing.

25. The method according to claim 24, wherein the at least one piece of synthetic data obtained through screening is determined based on a distance between first synthetic data to be removed and another piece of synthetic data in the multiple synthetic data items, and the first synthetic data to be removed is synthetic data that needs to be removed as determined based on the fifth information.

26. A model data obtaining method, performed by a second node or a circuit used for a second node, wherein the method comprises:
sending first information to a first node, wherein the first information comprises the following types of information: raw data and feature information of the raw data.

27. The method according to claim 26, wherein the method further comprises:
receiving second information from the first node, wherein the second information indicates a processing manner in which the second node obtains the first information, and the processing manner comprises an obtaining manner of the feature information of the raw data; and
obtaining the first information based on the second information.

28. The method according to claim 27, wherein the first information further comprises the following types of information: a data label of the raw data and/or a priority of the raw data.

29. The method according to any one of claims 26 to 28, wherein the method further comprises:
receiving third information from the first node, wherein the third information indicates a reporting configuration of the first information.

30. The method according to claim 29, wherein the reporting configuration comprises at least one of the following: a type of the first information and a data quantity of the first information.

31. The method according to any one of claims 26 to 30, wherein the method further comprises:
receiving fourth information from the first node, wherein the fourth information indicates that the first node has a capability of performing joint processing on feature information of multiple raw data items of a same group.

32. The method according to any one of claims 26 to 31, wherein the first information further comprises the following type of information: group information of the raw data.

33. The method according to any one of claims 26 to 32, wherein the method further comprises:
receiving at least one subset of multiple synthetic data items from the first node; and
sending fifth information to the first node, wherein the fifth information indicates an evaluation result of at least one piece of synthetic data in the at least one subset, and the evaluation result indicates at least one piece of synthetic data that needs to be removed from the at least one subset, or indicates at least one piece of synthetic data that does not need to be removed from the at least one subset.

34. The method according to claim 33, wherein the evaluation result is determined based on a distance between at least one piece of synthetic data in the at least one subset and local data.

35. The method according to claim 33 or 34, wherein the evaluation result is used to screen the multiple synthetic data items to obtain at least one piece of synthetic data obtained through screening, wherein the at least one piece of synthetic data obtained through screening is used for model processing.

36. A model data obtaining method, performed by a second node or a circuit used for a second node, wherein the method comprises:
sending sixth information to a first node, wherein the sixth information comprises the following type of information: raw data; and
sending ninth information to the first node, wherein the ninth information indicates an obtaining manner in which the first node obtains feature information of the raw data.

37. The method according to claim 36, wherein the method further comprises:
receiving eighth information from the first node, wherein the eighth information indicates a processing manner in which the second node obtains the sixth information, and the processing manner in which the second node obtains the sixth information comprises an obtaining manner of a data label of the raw data.

38. The method according to claim 36 or 37, wherein the method further comprises:
receiving seventh information from the first node, wherein the seventh information indicates a reporting configuration of the sixth information.

39. The method according to any one of claims 36 to 38, wherein the method further comprises:
receiving fourth information from the first node, wherein the fourth information indicates that the first node has a capability of performing joint processing on feature information of multiple raw data items of a same group.

40. The method according to any one of claims 36 to 39, wherein the method further comprises:
receiving at least one subset of multiple synthetic data items from the first node; and
sending fifth information to the first node, wherein the fifth information indicates an evaluation result of at least one piece of synthetic data in the at least one subset, and the evaluation result indicates at least one piece of synthetic data that needs to be removed from the at least one subset, or indicates at least one piece of synthetic data that does not need to be removed from the at least one subset.

41. The method according to claim 40, wherein the evaluation result is determined based on a distance between at least one piece of synthetic data in the at least one subset and local data.

42. The method according to claim 40 or 41, wherein the evaluation result is used to screen the multiple synthetic data items to obtain at least one piece of synthetic data obtained through screening, wherein the at least one piece of synthetic data obtained through screening is used for model processing.

43. A model data obtaining method, performed by a third node or a circuit used for a third node, wherein the method comprises:
sending eleventh information to a first node, wherein the eleventh information comprises the following type of information: feature information of raw data.

44. A model data obtaining method, performed by a third node or a circuit used for a third node, wherein the method comprises:
sending ninth information to a first node, wherein the ninth information indicates an obtaining manner in which the first node obtains feature information of raw data.

45. A model data obtaining apparatus, comprising a module configured to implement the method according to any one of claims 1 to 44.

46. A communication apparatus, wherein the apparatus comprises a processor and a memory, the memory is configured to store program code, and the processor is configured to invoke the program code to perform the method according to any one of claims 1 to 44.

47. A computer-readable storage medium, wherein the computer-readable storage medium stores a computer program, and when the computer program is executed by a processor, the method according to any one of claims 1 to 44 is performed.

48. A computer program product, wherein the computer program product comprises related program instructions, and when the related program instructions are executed, the method according to any one of claims 1 to 44 is implemented.
